# EUROPEAN PATENT SPECIFICATION

(11) **EP 3 438 926 B1**
(45) Date of publication and mention of the grant of the patent: **16.10.2024**
(21) Application number: 17774921.5
(22) Date of filing: 27.03.2017
(51) Int. Cl.: G06V 40/00, G06V 10/98, G06V 10/94

(54) **BIODATA PROCESSING DEVICE, BIODATA PROCESSING SYSTEM, BIODATA PROCESSING METHOD, BIODATA PROCESSING PROGRAM, AND RECORDING MEDIUM FOR STORING BIODATA PROCESSING PROGRAM**
VORRICHTUNG ZUR VERARBEITUNG VON BIODATEN, SYSTEM ZUR VERARBEITUNG VON BIODATEN, VERFAHREN ZUR VERARBEITUNG VON BIODATEN, PROGRAMM ZUR VERARBEITUNG VON BIODATEN UND AUFZEICHNUNGSMEDIUM ZUR SPEICHERUNG EINES PROGRAMMS ZUR VERARBEITUNG VON BIODATEN
DISPOSITIF DE TRAITEMENT DE DONNÉES PERSONNELLES, SYSTÈME DE TRAITEMENT DE DONNÉES PERSONNELLES, PROCÉDÉ DE TRAITEMENT DE DONNÉES PERSONNELLES, PROGRAMME DE TRAITEMENT DE DONNÉES PERSONNELLES, ET SUPPORT D'ENREGISTREMENT POUR STOCKER LE PROGRAMME DE TRAITEMENT DE DONNÉES PERSONNELLES

(30) Priority: 28.03.2016 JP 2016064097
(43) Date of publication of application: 06.02.2019
(73) Proprietor: NEC Corporation, Tokyo 108-8001 (JP)
(72) Inventor: IWATA Daichi, Tokyo 108-8001 (JP); ENDO Keiji, Tokyo 108-8001 (JP)
(74) Representative: Reddie & Grose LLP
(86) International application number: PCT/JP2017/012364
(87) International publication number: WO 2017/170384

(56) References cited:
- EP-A2- 2 009 596
- JP-A- 2001 167 270
- JP-A- 2011 215 942
- JP-A- 2014 102 845
- JP-A- 2015 082 205
- JP-A- 2015 184 717
- BING-ZHONG JING ET AL: "Anti-Spoofing System for RFID Access Control combining with Face Recognition", MACHINE LEARNING AND CYBERNETICS (ICMLC), 2010 INTERNATIONAL CONFERENCE ON, IEEE, PISCATAWAY, NJ, USA, 11 July 2010 (2010-07-11), pages 698 - 703, XP031759655, ISBN: 978-1-4244-6526-2
- FRISCHHOLZ R W ET AL: "Avoiding replay-attacks in a face recognition system using head-pose estimation", ANALYSIS AND MODELING OF FACES AND GESTURES, 2003. AMFG 2003. IEEE INT ERNATIONAL WORKSHOP ON 17 OCT. 2003, PISCATAWAY, NJ, USA,IEEE, 1 January 2003 (2003-01-01), pages 234 - 235, XP010664370, ISBN: 978-0-7695-2010-0, DOI: 10.1109/AMFG.2003.1240849
- MARCEL SEBASTIEN: "Handbook of Biometric Anti-Spoofing, 1st ed", 1 January 2014, SPRINGER, pages: 77 - 77, XP055816638

## Description

### TECHNICAL FIELD

The present invention relates to a biometric data processing apparatus that authenticates a user using the biometric data of the user, a biometric data processing system, a biometric data processing method, a biometric data processing program, and a storage medium storing biometric data processing program.

### BACKGROUND ART

In recent years, biometric authentication technology has been used in various situations such as entry and exit management, settlement, and banking transactions. The biometric authentication technology utilizes a technique of collating biometric information acquired from a part of the user's body or user's behavior with registered biometric information.

EP2009596 discloses a system in which, when the reading quality during the authentication process is less than a predetermined level of quality, image processing to improve the quality of a read image that is not performed during the registration process is performed to improve the image quality, thus making the biometric authentication successful. Software to improve the image quality is added by upgrading the version of the authentication software to successively add image improvement software to the authentication software irrespective of the registration process.

An example of a system using a biometric authentication technology is described in Japanese Laid-open Patent Publication No. 2002-183095. When the user inputs a correct password, the IC card described in Patent Document 1 displays a correct fingerprint input order. Further, when the user inputs an incorrect password, the IC card displays an erroneous fingerprint input order. In a case where the fingerprint input by the user and the input order are correct, a control apparatus inserted with the IC card operates a key opening and closing apparatus.

Meanwhile, it takes a certain period of time to acquire and collate biometric data used in the biometric authentication technology. In particular, it tends to take a lot of time to acquire high-resolution biometric data and collate biometric data under high security. Then, the time is increased during which the user terminal executing the authentication process may receive erroneous operation from the user, thus increasing the possibility of the authentication process not being performed normally due to an unintended operation caused by erroneous operation.

However, in the above-described systems, there is a problem that it is impossible to prevent erroneous operation by the user, occurring during the authentication process in the biometric data processing apparatus which is the user terminal. We have appreciated that it would be desirable to provide a biometric data processing apparatus that solves the problem of not being able to prevent erroneous operation by the user occurring during the authentication process in the biometric data processing apparatus.

In EP2009596, in Jing, "Anti-Spoofing System for RFID Access Control combining with Face Recognition", IEEE ICMLC, 2010, XP31759655 and in Frischholz, "Avoiding replay-attacks in a face recognition system using head-pose estimation", IEEE AFMG, 2003, XP010664370, interactive techniques with biometric quality control have been proposed. However the users knows in advance which kind of biometric will be asked which still gives an advantage to impersonators.

### SUMMARY OF THE INVENTION

The invention is defined by the independent claims to which reference is now made. Advantageous features are set forth by the dependent claims.

It should be noted that any combination of the above constituent elements and converted forms expressing the present invention among a method, an apparatus, a system, a recording medium, a computer program, and the like are also effective as aspects of the present invention.

Further, the various constituent elements of the present invention do not necessarily have to exist individually and independently, a plurality of constituent elements may be formed as a single member, one component may be formed by a plurality of members, a certain constituent element is a part of another constituent element, and a part of a certain constituent element may overlap with a part of another constituent element, within the scope defined by the independent claims.

Further, although a plurality of procedures are described in order in the method and the computer program of the present invention, the order of description does not limit the order of executing a plurality of procedures. Therefore, when implementing the method and the computer program of the present invention, the order of the plurality of procedures can be changed within a range that does not interfere with the contents, as long as it follows the order set forth in the independent claims.

Furthermore, the plurality of procedures of the method and the computer program of the present invention are not limited to being executed individually at different timings. Therefore, another procedure may occur during the execution of a certain procedure, some or all of the execution timing of a certain procedure overlaps with the execution timing of another procedure, or the like, within the scope defined by the independent claims.

According to the present invention, it is possible to provide a biometric data processing system that prevents an erroneous operation of a user occurring during an authentication process in the biometric data processing system and better protects against impersonation attempts.

### BRIEF DESCRIPTION OF THE DRAWINGS

The foregoing and other objects, features and advantages will become more apparent from the following description of preferred example embodiments and the accompanying drawings.

FIG. 1 is a block diagram showing a configuration example of a first example embodiment.
FIG. 2 is a sequence diagram illustrating an example of an operation in the first example embodiment.
FIG. 3 is an explanatory diagram illustrating an example of an input process by a user.
FIG. 4 is an example of a display on a display unit 13.
FIG. 5 is an example of a display on the display unit 13.
FIG. 6 is an example of data stored in a storage unit 16.
FIG. 7 is an example of a display on the display unit 13.
FIG. 8 is an example of a display on the display unit 13.
FIG. 9 is an example of data stored in a storage unit 31.
FIG. 10 is a block diagram showing a configuration example of a second example embodiment.
FIG. 11 is a sequence diagram illustrating an example of an operation in the second example embodiment.
FIG. 12 is an explanatory diagram illustrating an example of an input process by the user.
FIG. 13 is a block diagram showing a configuration example of a third example embodiment.
FIG. 14 is an example of a hardware configuration.
FIG. 15 is an example of a hardware configuration.
FIG. 16 is a block diagram showing a configuration example of a fourth example embodiment.
FIG. 17 is a block diagram showing a configuration example of a fifth example embodiment.

### DESCRIPTION OF EMBODIMENTS

Hereinafter, example embodiments of the present invention will be described in detail with reference to the drawings. However, constituent elements described in the following example embodiments are examples, and the scope of the invention is defined by the independent claims.

In the example embodiments of the present specification, it is assumed that a user sends money to a specific party through Internet banking which is a banking service through the Internet. Using a user terminal, the user accesses a system implementing Internet banking and receives a remittance service from the bank. Hereinafter, the system implementing Internet banking is called a bank system. In order to prevent unauthorized remittance, the banking system needs to authenticate that the user trying to receive the banking service is the same person as the previously registered person. In the example embodiments of the present specification, it is assumed that the user is authenticated using biometric data. A user terminal operated by the user is hereinafter referred to as a biometric data processing apparatus.

The biometric data is data representing a biometric feature or a behavioral feature of a human being, and may be fingerprint image data, vein image data, face image data, iris image data, voice data, or the like.

In addition, in the example embodiments of the present specification, a server which is one of apparatuses implementing a bank system will also be described. The server stores customer's bank data, deposit balance, or the like. The server provides a banking service based on information transmitted from the biometric data processing apparatus.

Note that, the usage scene of the present invention is not limited to the banking service. For example, the present invention may be used in the scene of user authentication in mail order, entry and exit management, credit card settlement or the like.

### (First Example Embodiment)

### (Configuration of First Example Embodiment)

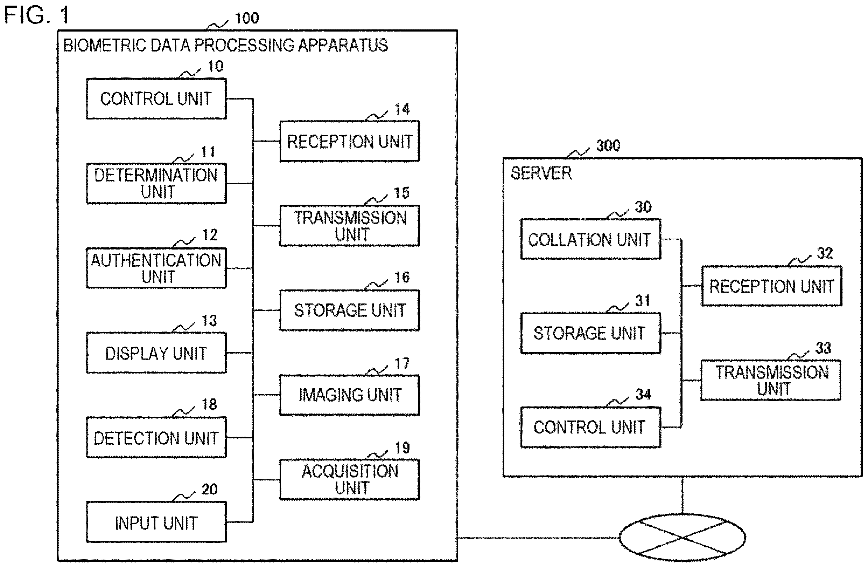

The configuration example of a first example embodiment will be described. FIG. 1 is a diagram showing a configuration example of the first example embodiment. A biometric data processing apparatus 100 includes a control unit 10, a determination unit 11, an authentication unit 12, a display unit 13, a reception unit 14, a transmission unit 15, a storage unit 16, an imaging unit 17, a detection unit 18, an acquisition unit 19, and an input unit 20.

The control unit 10 causes the display unit 13 to display a message requesting a user to perform a predetermined action. The predetermined action may be any action as long as it is a movement of the user that can be detected by the detection unit 18. For example, if the detection unit 18 is a touch panel, the predetermined action may be a user's action of touching the touch panel, a user's action of tracing the touch panel in the form of a specific character, or the like. For example, if the detection unit 18 is a microphone, it may be a user's action of emitting sound. The control unit 10 may cause the display unit 13 to display illustrations, photographs, or the like showing a predetermined action to the user. The control unit 10 may acquire image data such as messages, and illustrations, from the storage unit 16.

Further, in response to the input process performed by the user through the input unit 20, the control unit 10 causes the display unit 13 to display a message requesting an input of biometric data having a predetermined feature. The predetermined feature may be any feature as long as it is a feature possessed by the biometric data. The predetermined feature may be, for example, a feature of an eye when the user looks in a specific direction, a feature of a voice when the user speaks a specific word, a feature of a fingerprint of a specific finger among ten fingers, and the like. Further, it is preferable that the predetermined feature is such that the user can input the biometric data having the feature with his own intention. For example, the user can input the feature of the eyes when looking in a specific direction by moving his eyes with his own intention. In addition, the user can input the feature of the voice when speaking a specific word by speaking the word with his own intention.

The control unit 10 may cause the display unit 13 to display illustrations or photographs showing how to input biometric data having a predetermined feature to the user. The control unit 10 may acquire image data such as messages and illustrations from the storage unit 16.

Further, in a case where the biometric data of the user is determined to have the predetermined quality, the control unit 10 causes the display unit 13 to display a progress status of the whole authentication process. The whole authentication process means an entire process from acquisition of biometric data to completion of authentication of a user. The whole authentication process includes a process of acquiring biometric data of a user and a process of collating biometric data. The process of collating biometric data is a process of collating the biometric data of a user with the previously registered biometric data.

The display unit 13 displays a message requesting a user to perform a predetermined action. The display unit 13 may display illustrations, photographs, or the like showing a predetermined action to the user. Further, the display unit 13 displays a message requesting an input of biometric data having a predetermined feature. The display unit 13 may display illustrations or photographs showing how to input biometric data having a predetermined feature to the user.

The determination unit 11 determines whether or not biometric data of the user has a predetermined quality. The predetermined quality as referred to herein means a quality suitable for collation of biometric data with other biometric data. Further, the predetermined quality may vary depending on the type of biometric data. For example, in a case where the biometric data is image data, the quality may be whether or not the luminance or color of the image data and the shape of a living body is detected, or the like. The detection of the shape of a living body may be achieved by pattern recognition or the like. Further, in a case where the biometric data is voice data, the quality may be sound volume, S/N ratio, or the like. The predetermined quality may be a range in which the above-described luminance, color, volume, and S/N ratio are preferable for collation.

For example, it is assumed that the predetermined quality is represented by the average value of the luminance of the entire image data. In a case where the average value of the luminance of the entire face image data as biometric data is higher than the predetermined quality, the image data is in a state of being too bright. Image data is in a state of being too bright in a case where light emitted by the subject itself or light hitting the subject is strong. The image data in the state of being too bright may have a part of the face not photographed or photographed but missing a part. Thus, there is a possibility that feature value data based on the part of the face cannot be appropriately extracted from the image data whose luminance is higher than the predetermined value. The determination unit 11 can determine that the biometric data is not of a predetermined quality with respect to such an image, and can prevent such an image from being used for the collating process.

Further, the determination unit 11 may collate the feature extracted from the biometric data with the predetermined feature. More specifically, the determination unit 11 first extracts feature value data from biometric data. Extraction of the feature value data may be achieved by a method such as Scale-Invariant Feature Transform (SIFT) or Histograms of Oriented Gradients (HOG). Then, the determination unit 11 acquires feature value data indicating a predetermined feature, and collates the feature value data with feature value data indicating the predetermined feature. The acquisition unit 19 may acquire feature value data indicating a predetermined feature from the storage unit 16. The determination unit 11 may determine whether or not the score calculated by collating the feature value data extracted from the biometric data with the feature value data indicating a predetermined feature is equal to or more than a predetermined threshold value.

The detection unit 18 detects a predetermined action of the user. For example, in a case where the detection unit 18 is a capacitance touch panel and a predetermined action is touching the touch panel, the detection unit 18 may detect the user's touch on the touch panel as a change in the amount of charge.

Further, the predetermined action may be a gesture, and the detection unit 18 may be a processor. For example, in a case where the action is a gesture of "raising the left hand", the detection unit 18 first detects the left hand of the user from the image data generated by the imaging unit 17. Detection of the left hand of the user may be achieved by pattern matching. The detection unit 18 may track the movement of the detected left hand, and detect the upward movement of the left hand, that is, the user's action of "raising the left hand".

In a case where a collation score (referred to as a first score) of the biometric data of the user and the previously-registered biometric data is equal to or more than a predetermined threshold value and the detection unit 18 continuously detects the predetermined action and a collation score (referred to as a second score) of a feature extracted from the biometric data and a predetermined feature is equal to or more than a predetermined threshold value, the authentication unit 12 determines that the authentication of the user is successful. Hereinafter, the authentication unit 12 will be specifically described.

The authentication unit 12 acquires data indicating whether or not the first score calculated by collating the biometric data of the user and the previously registered biometric data is equal to or more than a predetermined threshold value. The authentication unit 12 may acquire data indicating whether or not the second score calculated by collating the biometric data of the user and the previously registered biometric data is equal to or more than a predetermined threshold value, from the collation unit 30 in the server 300.

Further, the authentication unit 12 determines whether the detection unit 18 continuously detects the predetermined action from when the detection unit 18 first detects a predetermined action after the message is displayed until the authentication process in the biometric data processing apparatus 100 is ended. For example, after the display unit 13 displays a message requesting the user to perform a predetermined action, the authentication unit 12 acquires information indicating that a predetermined action of the user is detected, from the detection unit 18. In a case where the user continuously performs a predetermined action, the detection unit 18 continuously detects the predetermined action of the user.

Here, it is assumed that a predetermined action is touching the touch panel. For example, in a case where the detection unit 18 is a capacitance touch panel, the detection unit 18 detects a predetermined action of the user by a change in the amount of charge. By acquiring the amount of charge detected by the detection unit 18, the authentication unit 12 can determine whether or not the user is performing a predetermined action and is continuing the action. For example, the authentication unit 12 determines whether or not the amount of charge after change is continuously detected from when the amount of charge detected by the detection unit 18 first changes, after the display unit 13 displays a message requesting a predetermined action until the authentication process in the biometric data processing apparatus 100 is ended. In such a case, the authentication unit 12 determines that the detection unit 18 continuously detects the predetermined action.

On the other hand, when the user stops touching the touch panel after touching the touch panel, the amount of charge detected by the detection unit 18 returns to the value before the change. Therefore, in a case where the detected amount of charge becomes the value before the change before completion of the authentication process in the biometric data processing apparatus 100, the authentication unit 12 determines that the detection unit 18 did not continuously detect the predetermined action.

Here, the authentication process in the biometric data processing apparatus 100 refers to the process performed by the biometric data processing apparatus 100 out of the whole authentication process. For example, in a case where the biometric data processing apparatus 100 performs a process of acquiring biometric data of a user and the server 300 performs a process of collating biometric data, the authentication process in the biometric data processing apparatus 100 is a process of acquiring the biometric data of the user.

The authentication unit 12 acquires data indicating whether or not the first score calculated by collating the feature extracted from the biometric data and the predetermined feature is equal to or more than a predetermined threshold value. The authentication unit 12 may acquire from the determination unit 11, data indicating whether or not the first score calculated by collating the feature extracted from the biometric data and the predetermined feature is equal to or more than a predetermined threshold value.

The authentication unit 12 acquires, for example, data indicating a collation score (a first score) of the biometric data being equal to or more than a predetermined threshold value, and data indicating a collation score (a second score) of a feature extracted from the biometric data and a predetermined feature being equal to or more than a predetermined threshold value and the detection unit 18 has been determined to have continuously detected the predetermined action, the authentication unit 12 determines that the authentication of the user is successful.

Note that, the authentication unit 12 may determine whether or not predetermined information has been continuously acquired from when predetermined information is acquired from the detection unit 18 after the message is displayed until the authentication process in the biometric data processing apparatus 100 is ended. For example, in a case where the detection unit 18 is a capacitance touch panel, the authentication unit 12 may determine whether or not the information indicating the amount of charge when a person touches the detection unit 18 has been continuously acquired from the detection unit 18.

The acquisition unit 19 acquires information on a service to be received by the user from the input unit 20. The service may be any service as long as it is a service, a waiting, a civil service or the like that a user receives. For example, the service may be a banking service mediating financial transactions, a mail order service mediating product trading through the Internet, a settlement service using a credit card, or the like. For example, in a case where the service to be received by the user is a remittance service in the banking service, the information on the service to be received by the user may be the user identification (ID), the user's account number, the branch name of the user's account, the user's password, the user's name, and the like. In addition, the information on the service to be received by the user may be the account number of the remittee, the branch name of the account of the remittee, the name of the payee, the remittance amount, and the like.

The input unit 20 receives information on the service to be received by the user based on an input process by the user. The input process by the user means a process in which the user operates the input unit 20 and inputs information.

The imaging unit 17 converts a light image into an electric signal to generate image data. The image data generated by the imaging unit 17 may be face image data, fingerprint image data, vein image data, iris image data, and the like of the user.

The storage unit 16 stores messages displayed on the display unit 13 and various data. The storage unit 16 may store illustrations, photographs, and the like showing the predetermined action to the user as image data. In addition, the storage unit 16 may store illustrations, photographs, and the like showing how to input biometric data having a predetermined feature to the user as image data. Further, the storage unit 16 may store feature value data indicating a predetermined feature. The storage unit 16 may store feature value data indicating a predetermined feature in association with a message requesting an input of biometric data having a predetermined feature.

The reception unit 14 receives data transmitted from the server 300 and other apparatuses. The transmission unit 15 transmits data to the server 300 and other apparatuses.

The server 300 includes a collation unit 30, a storage unit 31, a reception unit 32, a transmission unit 33, and a control unit 34. The server 300 may be connected to the biometric data processing apparatus 100 through the Internet. The server 300 may be directly connected to the biometric data processing apparatus 100 wirelessly or through a wired line.

The collation unit 30 collates biometric data of the user with biometric data previously stored in the storage unit 31. Then, the second score calculated by collation is compared with a predetermined threshold value. In a case where the second score calculated by the collation is equal to or more than the predetermined threshold value, the collation unit 30 transmits the data indicating to that effect to the biometric data processing apparatus 100 through the transmission unit 33. Even in a case where the second score calculated by the collation is less than the predetermined threshold value, the collation unit 30 may transmit the data indicating to that effect to the biometric data processing apparatus 100 through the transmission unit 33.

The storage unit 31 stores the biometric data of the customers (users) of the bank. The storage unit 31 may store personal information such as the user's name, address, date of birth, sex, and My Number (personal number). Further, the storage unit 31 may store information required for users to receive banking services, such as the user's account number, deposit balance, remittance upper limit amount, and password.

In a case where the authentication of the user is successful, the control unit 34 provides the user with the service. For example, the control unit 34 executes a remittance process of money from the user's account to the account specified by the user.

The reception unit 32 receives data transmitted from the biometric data processing apparatus 100 and other apparatuses. The transmission unit 33 transmits data to the biometric data processing apparatus 100 and other apparatuses.

### (Operation of First Example Embodiment)

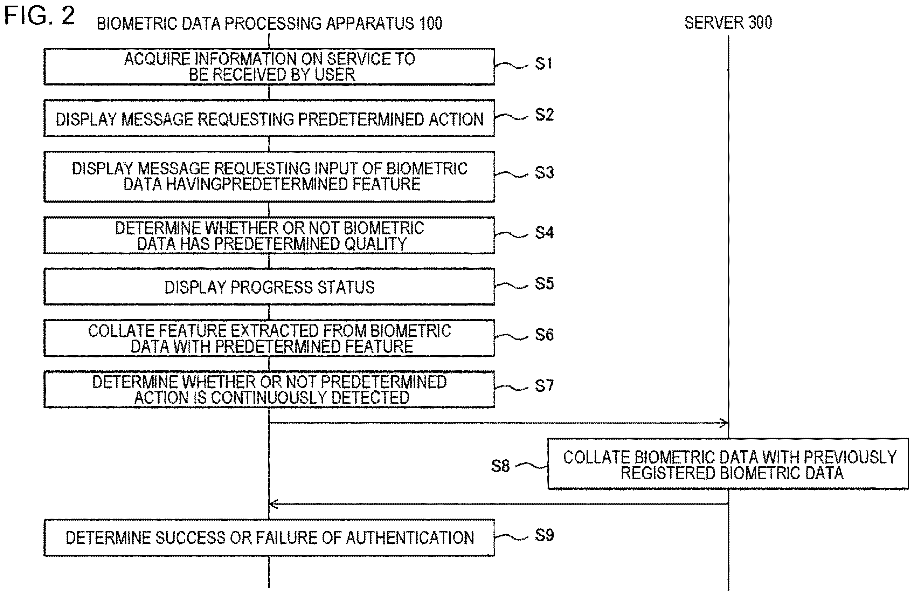

Next, the operations of the biometric data processing apparatus 100 and the server 300 will be described using specific examples. In the present example embodiment, the biometric data processing apparatus 100 is described as being a smartphone. Further, in the present example embodiment, it is described that the display unit 13 is a display of a smartphone, and the input unit 20 and the detection unit 18 are a touch panel which is a part of the display. FIG. 2 is a sequence diagram showing an example of operations of the biometric data processing apparatus 100 and the server 300.

For example, the user first activates a predetermined application previously downloaded in the biometric data processing apparatus 100. Then, the user inputs information on the service to be received by the user to the biometric data processing apparatus 100 through the input unit 20. Specifically, the user inputs information for the bank system to identify an individual through the touch panel as information on the service. Information for identifying an individual may be, for example, a user ID, a user's name, a password, an email address, or the like. In the present example embodiment, the user inputs the user ID. Subsequently, the user inputs the service he wishes to receive. For example, the user inputs a "remittance" service on the touch panel. Then, the user inputs information on the remittee to the biometric data processing apparatus 100.

The acquisition unit 19 acquires information on a service to be received by the user from the input unit 20 (S1). For example, the acquisition unit 19 acquires information indicating the position on the touch panel touched by the user's finger from the input unit 20, and converts the information input by the user into computer-compatible character data or the like. In the above example, the acquisition unit 19 acquires from the input unit 20 the user ID input by the user, the "remittance" service, and the information on a remittee.

The control unit 10 may cause the display unit 13 to display information on the service to be received by the user, which is acquired by the acquisition unit 19. Thus, the user viewing the display unit 13 can determine whether his input is correct.

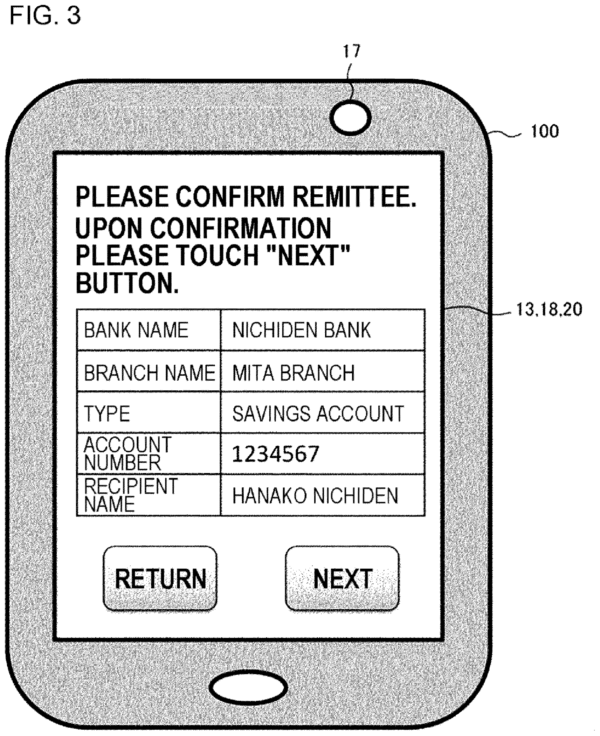

An example of an input process by a user is illustrated in FIG. 3. In FIG. 3, the display unit 13 displays information on a remittance destination input by the user. The imaging unit 17 is a camera built in the smartphone and is provided at a position allowing to image the face of the user viewing the display of the smartphone.

FIG. 3 shows that the user has inputted the information of the bank name "Nichiden Bank", the branch name "Mita branch", the type "savings account", the account number "134567", and the recipient "Hanako Nichiden" to the biometric data processing apparatus 100. The user may input such information by touching the touch panel which is the input unit 20 with a finger. Further, the display unit 13 displays a message "Please confirm the remittee. Upon confirmation please touch the "next" button.", prompting the user to check the information that the user has inputted. The user viewing the display unit 13 confirms that the information the user has inputted is correct and touches a portion on the display unit 13 where "next" is displayed.

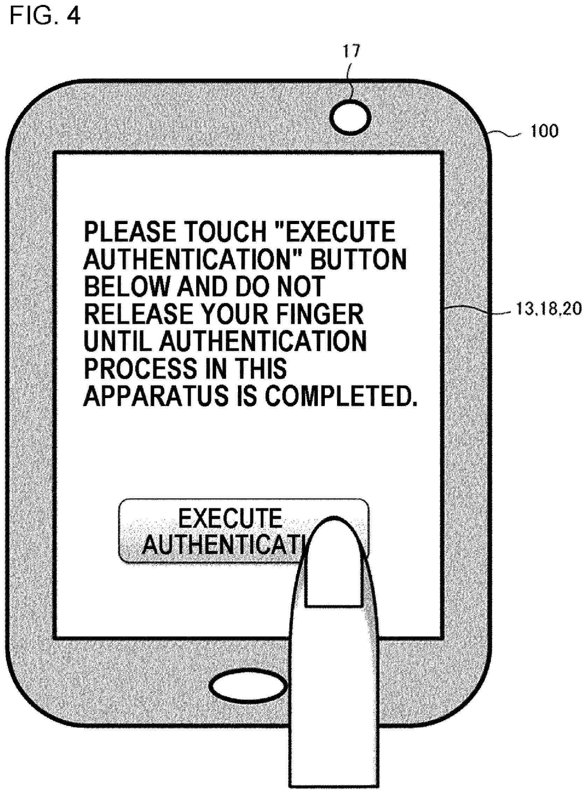

The control unit 10 causes the display unit 13 to display a message requesting a user to perform a predetermined action (S2). A display example of a message by the display unit 13 is illustrated in FIG. 4. In FIG. 4, a message "Please touch "execute authentication" button below and do not release your finger until authentication process in this apparatus is completed." is displayed on the display unit 13. That is, the predetermined action required of the user is an action to touch the "execute authentication" button. The user viewing the display unit 13 touches a portion on the display unit 13 on which "execute authentication" is displayed and keeps the finger in place.

The detection unit 18 detects a predetermined action of the user. In the above example, the detection unit 18, which is a touch panel, detects that the user is touching a portion of the display unit 13 on which "execute authentication" is displayed.

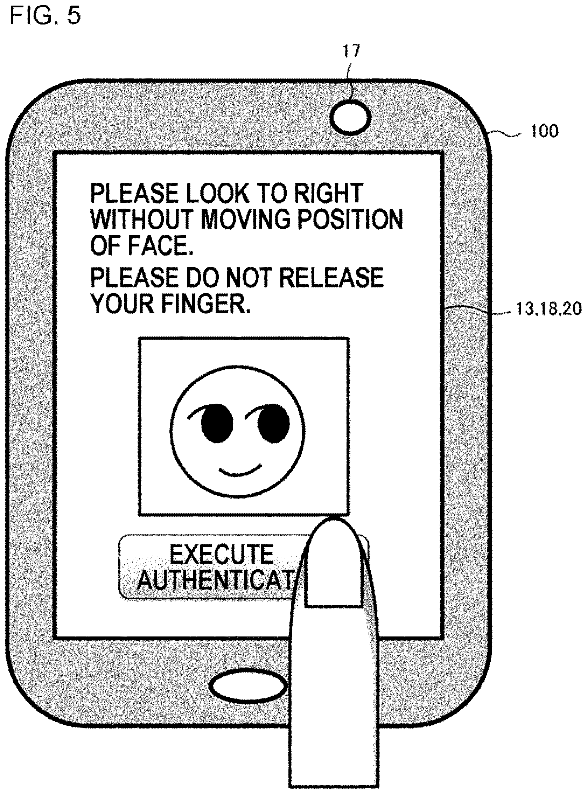

In a case where the detection unit 18 detects a predetermined action by the user, the control unit 10 causes the display unit 13 to display a message requesting an input of biometric data having a predetermined feature (S3). An example of a display by the display unit 13 is illustrated in FIG. 5. In FIG. 5, a message "Please look to the right without moving the position of your face." is displayed on the display unit 13. That is, the display unit 13 displays a message requesting an input of biometric data having a feature when the face is directed to the front and the eyes are looking to the right. Further, the display unit 13 displays a message "Please keep your finger in place." requesting the user to continue the action of touching the "execute authentication" button. Further, the display unit 13 displays an illustration of a person looking to the right, which is an illustration showing how to input biometric data having a predetermined feature.

In a case where the detection unit 18 does not detect a predetermined action of the user within a predetermined time, the acquisition unit 19 may acquire information on the service to be received again by the user from the input unit 20. At this time, the control unit 10 may cause the display unit 13 to display a message requesting re-inputting of the remittee. Alternatively, in a case where the detection unit 18 does not detect a predetermined action of the user within a predetermined time, the authentication unit 12 may determine that the authentication of the user has failed. At this time, the control unit 10 may cause the display unit 13 to display a message indicating that authentication has failed.

The user viewing the display on the display unit 13 shown in FIG. 5 looks at the right without moving the position of the face. The imaging unit 17 captures the face of the user looking to the right and generates face image data of the user. The imaging unit 17 may continuously generate face image data of the user, after the display unit 13 displays a message requesting an input of biometric data having a predetermined feature. Alternatively, the imaging unit 17 may generate face image data of the user, for example, when it is detected that the user has touched a physical button or a buttons displayed by the display unit 13.

The determination unit 11 determines whether or not the biometric data of the user has a predetermined quality (S4). For example, the determination unit 11 determines whether or not the average value of the luminance of the entire face image data generated by the imaging unit 17 is within a predetermined range.

In a case where the determination unit 11 determines that the biometric data of the user has a predetermined quality, the control unit 10 causes the display unit 13 to display a progress status of the whole authentication process (S5). In the present example embodiment, it is assumed that the whole authentication process includes the processes of S1 to S9 shown in FIG. 2.

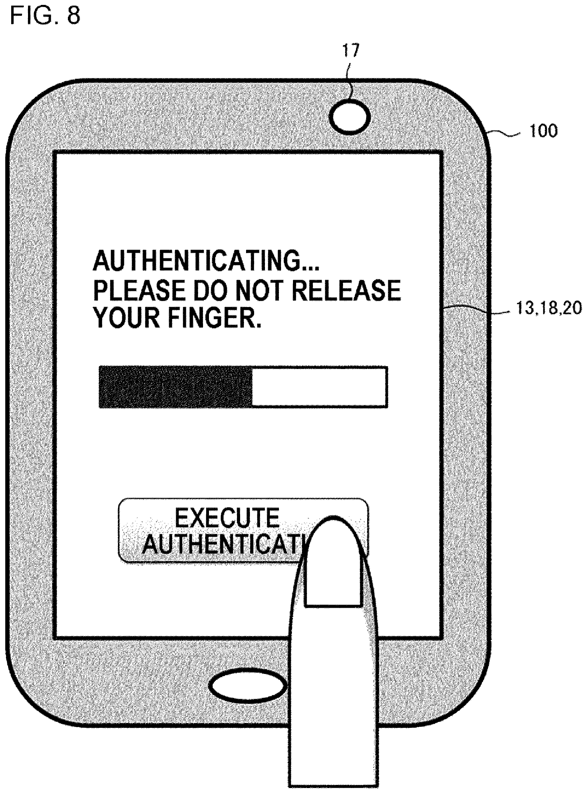

An example of a display by the display unit 13 is illustrated in FIG. 8. The display unit 13 shown in FIG. 8 displays messages "Authenticating..." and "Please do not release your finger." In addition, the display unit 13 displays the progress status of the whole authentication process by displaying a rectangle. In the rectangle, a proportion occupied by a dark colored part and a proportion occupied by a light colored part are respectively displayed on the display unit 13 as a completed process and an incomplete process. The proportions occupied by respective processes in the rectangle displayed may be equal to each other. That is, every time a process is completed, the proportion occupied by the dark colored part in the rectangle may increase by one-ninth.

In S5, the process of S1 to S5 has already been completed, but the process of S6 to S9 is not completed. Thus, the proportion occupied by the dark colored part in the rectangle displayed by the display unit 13 is 5/9.

In a case where the determination unit 11 determines that the biometric data of the user is not of a predetermined quality, the imaging unit 17 may recapture the face of the user and generate face image data. At this time, the control unit 10 may cause the display unit 13 to display a message requesting recapturing of the face. Further, the control unit 10 may cause the display unit 13 to display a message requesting improvement of the imaging environment so as to improve the quality of the face image data.

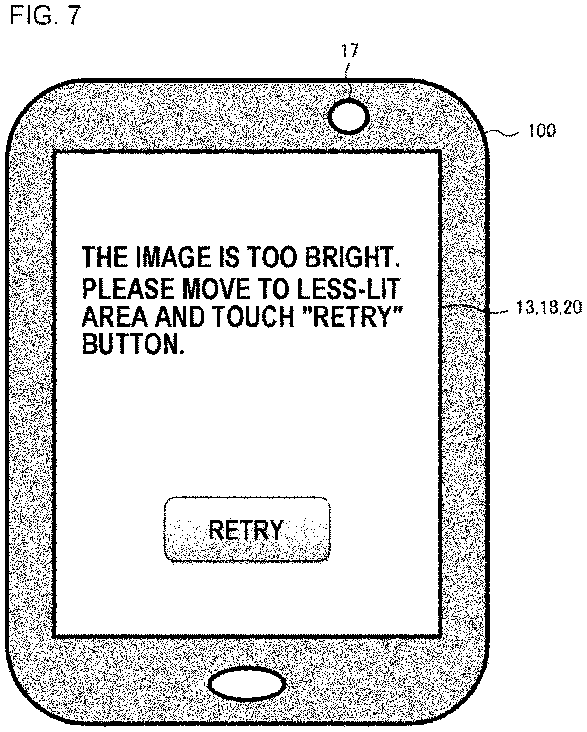

FIG. 7 shows an example of a display by the display unit 13 in a case where the average value of the luminance of the entire face image data is determined to be higher than the predetermined range, that is, when the luminance of the face image data is too high. The display unit 13 shown in FIG. 7 displays the message "The image is too bright. Please move to a less-lit area and touch the "Retry" button." The user who reads the message moves to a place with less illumination or direct sunlight, for example, and touches the "retry" button portion on the display unit 13. Thus, it is expected that the luminance of the regenerated face image data by the imaging unit 17 is lower than the luminance of the face image data generated earlier.

Alternatively, in a case where the biometric data of the user is determined not to have the predetermined quality, the authentication unit 12 may determine that the authentication of the user has failed. At this time, the control unit 10 may cause the display unit 13 to display a message indicating that authentication has failed.

Returning to the sequence diagram of FIG. 2, the determination unit 11 collates the feature extracted from the biometric data with a predetermined feature (S6). Then, the determination unit 11 determines whether or not the first score calculated by the collation is equal to or more than the predetermined threshold value. For example, the determination unit 11 may acquire feature value data corresponding to the predetermined feature displayed by the display unit 13 from the storage unit 16. That is, the determination unit 11 may acquire the feature value data corresponding to a message "Please look to the right without moving the position of the face." from the storage unit 16.

Further, the determination unit 11 may extract feature value data from the face image data generated by the imaging unit 17. Extraction of the feature value data may be realized by a method such as Scale-Invariant Feature Transform (SIFT) or Histograms of Oriented Gradients (HOG). Then, the determination unit 11 may collate the feature value data acquired from the storage unit 16 with the feature value data extracted from the facial image data to calculate a second score. Further, the determination unit 11 may determine whether or not the first score calculated by the collation of both pieces of the feature value data is equal to or more than the predetermined threshold value.

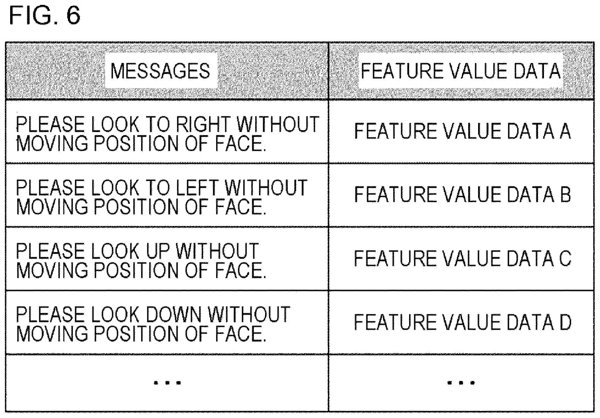

Here, an example of data stored in the storage unit 16 is shown in FIG. 6. As illustrated in FIG. 6, the storage unit 16 may store feature value data in association with a message requesting an input of biometric data having a predetermined feature. In FIG. 6, A message "Please look to the right without moving the position of the face." is associated with feature value data "feature value data A" of an image of a person's eyes when looking to the right. A message "Please look to the left without moving the position of the face." is associated with feature value data "feature value data B" of an image of a person's eyes when looking to the left. A message "Please look up without moving the position of the face." is associated with feature value data "feature value data C" of an image of a person's eyes when looking up. A message "Please look down without moving the position of the face." is associated with feature value data "feature value data D" of an image of a person's eyes when looking down.

The feature value data stored in the storage unit 16 may be generated by performing a statistical process on the feature value data extracted from a large number of image data obtained by capturing the person's eyes. That is, the feature value data stored in the storage unit 16 may be an object generated by learning feature value data indicating a predetermined feature.

In a case where the first score calculated by collating the feature value data acquired from the storage unit 16 with the feature value data extracted from the face image data is equal to or more than the predetermined threshold value, the authentication unit 12 determines whether or not the detection unit 18 continuously detects the predetermined action (S7). More specifically, the authentication unit 12 determines whether the detection unit 18 continuously detects the predetermined action from when the detection unit 18 first detects a predetermined action after the message requesting a predetermined action is displayed until the authentication process in the biometric data processing apparatus 100 is ended.

Here, the authentication process in the biometric data processing apparatus 100 according to the present example embodiment is the process of S1 to S6 shown in FIG. 2, as described above. The end of the authentication process in the biometric data processing apparatus 100 is indicated by the determination unit 11 calculating the collation result in S6 and completing the determination as to whether or not the first score is equal to or more than the predetermined threshold value. The predetermined action in the present example embodiment is the user touching the detection unit 18. Therefore, the authentication unit 12 determines whether the detection unit 18 has continuously detected contact of the user from when the detection unit 18 first detects the contact of the user after the message requesting a predetermined action is displayed until the determination in S6 in the determination unit 11 is ended.

More specifically, the authentication unit 12 sequentially acquires the amount of charge detected by the detection unit 18 which is a touch panel. Then, the authentication unit 12 determines whether or not the amount of charge after the change is continuously detected, from when the amount of charge detected by the detection unit 18 first changes after the display at S2 until the determination at S6 in the determination unit 11 is completed. In such a case, the authentication unit 12 determines that the detection unit 18 continuously detects the predetermined action. On the other hand, in a case where the value of the detected amount of charge becomes the value before the change from when the amount of charge first changes until the determination at S5 by the determination unit 11 is completed, the authentication unit 12 determines that the detection unit 18 did not continuously detect the predetermined action.

Next, in a case where the first score calculated by the collation of the feature value data is determined equal to or more than the predetermined threshold value, the determination unit 11 causes the transmission unit 15 to transmit the biometric data of the user. The determination unit 11 may cause the transmission unit 15 to transmit the feature value data extracted from the face image data generated by the imaging unit 17 as biometric data of the user. Further, the determination unit 11 may acquire information on the service to be received by the user from the acquisition unit 19, and causes the transmission unit 15 to transmit the acquired information together with the biometric data. In the present example embodiment, the determination unit 11 causes the transmission unit 15 to transmit the user ID input by the user, together with the biometric data of the user which is the feature value data.

The reception unit 32 in the server 300 receives the feature value data and the user ID. The collation unit 30 acquires the feature value data and the user ID from the reception unit 32. Then, the collation unit 30 acquires the face image data associated with the same user ID as the acquired user ID among the face image data stored in the storage unit 31.

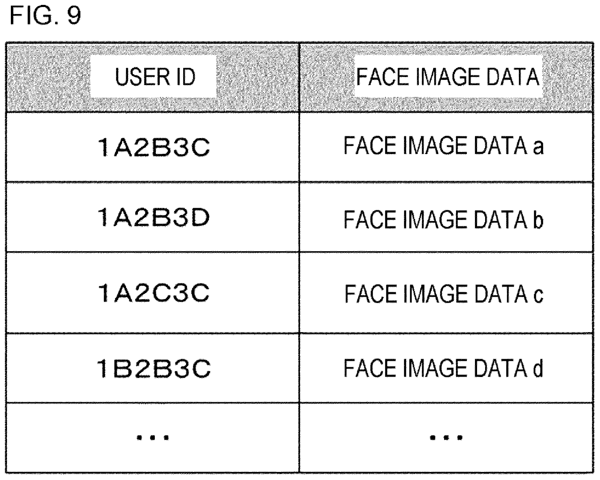

Here, an example of data stored in the storage unit 31 is shown in FIG. 9. As shown in FIG. 9, the storage unit 31 stores the user ID and the face image data of the user at the time of registration in association with each other. The face image data may be stored in the storage unit 31 when the user is registered in the bank system as a customer of the bank. The face image data stored in the storage unit 31 may be feature value data extracted from data generated by an imaging unit such as the imaging unit 17. Hereinafter, the face image data of the user stored in the storage unit 31 is referred to as previously registered biometric data or face image data.

The collation unit 30 collates the feature value data acquired from the reception unit 32 with the previously registered face image data acquired from the storage unit 31 to calculate a second score (S8). For example, if the acquired user ID is "1A2B3C", the collation unit 30 searches the storage unit 31 for the user ID " 1A2B3C". Then, the collation unit 30 acquires the face image data "face image data a" associated with the user ID matching the user ID "1A2B3C". The collation unit 30 collates the "face image data a" acquired from the storage unit 31 with the feature value data acquired from the reception unit 32.

Then, the collation unit 30 determines whether or not the second score calculated by the collation is equal to or more than the predetermined threshold value. The collation unit 30 transmits the determination result to the biometric data processing apparatus 100 through the transmission unit 33. The determination result is data indicating whether or not the second score calculated by the collation is equal to or more than the predetermined threshold value. The collation unit 30 may cause the transmission unit 33 to transmit the calculated second score together with the determination result. In the example embodiment, the transmission unit 33 transmits data indicating that the second score calculated by the collation is equal to or more than the predetermined threshold value, to the biometric data processing apparatus 100.

The authentication unit 12 determines whether or not the authentication of the user is successful, based on the data received from the server 300 (S9). In the example embodiment, the reception unit 14 in the biometric data processing apparatus 100 receives data indicating that the second score calculated by the collation is equal to or more than the predetermined threshold value. The authentication unit 12 determines that the authentication of the user is successful. On the other hand, in a case of acquiring data indicating that the second score calculated by the collation is less than the predetermined threshold value, the authentication unit 12 determines that the authentication of the user has failed.

The control unit 10 may cause the display unit 13 to display success or failure of the authentication of the user. For example, in a case where the authentication unit 12 determines that the authentication of the user is successful, the control unit 10 may cause the display unit 13 to display a message "Authentication successful". On the other hand, for example, in a case where the authentication unit 12 determines that the authentication of the user has failed, the control unit 10 may cause the display unit 13 to display a message "Authentication failed."

In the authentication process using biometric data, there may be persons impersonating another person to try and succeed in authentication by using biometric data of the other person acquired in advance. In the biometric data processing apparatus 100 of the present example embodiment, the display unit 13 displays a message requesting an input of biometric data having a predetermined feature. Further, in a case where a first score calculated by collating a feature extracted from the biometric data with the predetermined feature is equal to or more than a predetermined threshold value, the authentication unit 12 determines that the authentication of the user is successful.

Thus, even if a person impersonating a user to try and receive a service acquires biometric data of the user in advance, the authentication of this person would fail. This is because a person to be authenticated does not know what type of biometric data having what type of feature needs to be inputted, until a message is displayed on the display unit 13. Therefore, the biometric data processing apparatus 100 of the present example embodiment can prevent impersonation of another person.

The control unit 10 may cause the display unit 13 to display a message prompting to end the predetermined action, after the authentication process in the biometric data processing apparatus 100 is ended. The storage unit 16 may store the message in advance. As described above, the authentication process in the biometric data processing apparatus 100 according to the present example embodiment is the process of S1 to S6 shown in FIG. 2. The end of the authentication process in the biometric data processing apparatus 100 is indicated by the determination unit 11 calculating the collation result in S6 and completing the determination as to whether or not the first score is equal to or more than the predetermined threshold value. Therefore, after the determination unit 11 completes the determination on the feature extracted from the biometric data, the control unit 10 may cause the display unit 13 to display a message prompting to release the finger from the touch panel. Thus, the user can know how long the predetermined action needs to be continued. Thus, the convenience of the user using the biometric data processing apparatus 100 is improved.

Further, after the control unit 10 causes the display unit 13 to display a message requesting an input of biometric data having a predetermined feature, the control unit 10 may cause the display unit 13 to display a message requesting a predetermined action. Further, after the determination unit 11 determines whether or not the biometric data has a predetermined quality, the control unit 10 may cause the display unit 13 to display a message requesting a predetermined action. Thus, the time for the user to perform the predetermined action is shortened, and the burden on the user is reduced.

Before the determination unit 11 determines that the biometric data of the user has a predetermined quality, the control unit 10 may cause the display unit 13 to display a progress status of the whole authentication process. For example, after the acquisition unit 19 acquires information on the service to be received by the user, before displaying a message requesting a predetermined action, the control unit 10 may cause the display unit 13 to display the progress of the whole authentication process. Thus, the user can know the progress of the whole authentication process at an earlier stage, so that the user's stress is reduced.

Further, after determining that the biometric data of the user has a predetermined quality, the determination unit 11 may cause the transmission unit 15 to transmit the biometric data. That is, the determination unit 11 may cause the transmission unit 15 to transmit the biometric data before making a determination on the feature extracted from the biometric data. In this case, the collation unit 30 in the server 300 may perform a biometric data collation process in parallel with the authentication process in the biometric data processing apparatus 100. This shortens the time required for the whole authentication process.

The determination unit 11 may be a constituent element of the server 300. In this case, the determination unit 11 may make a determination on the biometric data transmitted from the biometric data processing apparatus 100, and may transmit the determination result to the biometric data processing apparatus 100. A part of the process performed by the determination unit 11 may be performed by the collation unit 30 in the server 300. For example, the determination unit 11 may determine whether the biometric data of the user has a predetermined quality or not, and the collation unit 30 may perform collation between the feature extracted from the biometric data and the predetermined feature. Thus, the number of authentication processes performed by the biometric data processing apparatus during the whole authentication process is reduced, and it is possible to shorten the time for the user to perform a predetermined action.

The collation unit 30 may be a constituent element of the biometric data processing apparatus 100. In this case, the collation unit 30 may acquire the previously registered biometric data from the storage unit 31 in the server 300 and perform collation. The storage unit 31 may be a constituent element of the biometric data processing apparatus 100. In this case, the storage unit 31 may store biometric data for one person. Thus, the number of data transmission and reception between the biometric data processing apparatus 100 and the server 300 is reduced, and the time required for the whole authentication process can be shortened.

In the case where the collation unit 30 is a constituent element of the biometric data processing apparatus 100, the biometric data processing apparatus 100 and the server 300 may perform operations conforming to the Fast IDentity Online (FIDO) (registered trademark) specification. For example, in a case where the second score resulting from the collation between the face image data acquired from the imaging unit 17 and the previously-registered face image data is equal to or more than the predetermined threshold value, the collation unit 30 in the biometric data processing apparatus 100 may encrypt authentication information by using a secret key. The collation unit 30 may cause the transmission unit 33 to transmit the encrypted authentication information. The control unit 34 in the server 300 may decrypt the authentication information transmitted from the biometric data processing apparatus 100 by using the public key. In a case where the decoding is successful, the control unit 34 may transmit the data indicating to that effect to the biometric data processing apparatus 100 through the transmission unit 33. In a case of acquiring data indicating that decoding has succeeded, the authentication unit 12 in the biometric data processing apparatus 100 may determine that the authentication of the user is successful.

In a case where the decoding has failed, the control unit 34 may transmit the data indicating to that effect to the biometric data processing apparatus 100 through the transmission unit 33. In a case of acquiring data indicating that decoding has failed, the authentication unit 12 in the biometric data processing apparatus 100 may determine that the authentication of the user has failed.

In a case where the biometric data processing apparatus 100 and the server 300 perform operations conforming to the FIDO specification, the authentication process in the biometric data processing apparatus 100 may include a process of receiving the data indicating whether the decoding is successful or not from the server 300. In this case, the authentication unit 12 may determine whether the detection unit 18 continuously detects the predetermined action from when the detection unit 18 first detects a predetermined action after the message is displayed until receiving the data indicating whether the decoding is successful or not from the server 300.

Further, the collation unit 30 may be implemented by a plurality of apparatuses. For example, the collation unit 30 may be implemented by the constituent elements in the biometric data processing apparatus 100 and the constituent elements in the server 300. That is, the constituent elements in the biometric data processing apparatus 100 and the constituent elements in the server 300 may cooperate to collate the biometric data of the user with the previously registered biometric data. In this case, the feature value data of previously registered biometric data may be secretly distributed and stored in the biometric data processing apparatus 100 and the server 300. Then, the biometric data processing apparatus 100 and the server 300 executes the collation between the biometric data of the user and the previously registered biometric data, and the collation score (the first score) may be calculated based on the calculation results of both apparatuses.

In a case where the biometric data is determined to have the predetermined quality, the imaging unit 17 may regenerate biometric data. For example, in a case where the determination unit 11 determines that the biometric data has a predetermined quality, the imaging unit 17 may recapture the face of the user and generate face image data. At this time, the imaging unit 17 may generate biometrics data having a larger amount of data than the biometrics data used to determine the quality. For example, the imaging unit 17 may generate image data with higher resolution than the image data used to determine the quality. The imaging unit 17 may generate image data or the like having a larger number of colors than the image data used to determine the quality.

Further, the determination unit 11 may perform image processing such as noise removal and contrast enhancement on the regenerated image data and improve the quality of the image data. Then, the determination unit 11 may collate the feature value data extracted from the regenerated face image data with the predetermined feature value data. The collation unit 30 may collate the regenerated face image data with the previously registered face image data.

Further, the control unit 10 may cause the display unit 13 to display the biometric data generated by the imaging unit 17. Further, in a case where the biometric data is determined to have the predetermined quality, the control unit 10 causes the display unit 13 to display to that effect. For example, in a case where the biometric data is determined to have the predetermined quality, the control unit 10 may display a frame of a color different from the background at the edge of the biometric data displayed by the display unit 13. Thus, the user can know that the quality of the captured face image is good. By attempting to maintain the current imaging environment, the user has a high possibility of generating high-quality image data when the imaging unit 17 regenerates the image data. In addition, it takes a lot of time to generate biometric data with a large amount of data, and the image process of the biometric data takes a certain amount of time. That is, it takes a longer time to generate image data with better quality. Thus, by generating biometric data with better quality after the biometric data is determined to have the predetermined quality, it is possible to shorten the time required for the whole authentication process.

The acquisition unit 19 may acquire a part of information on the service to be received by the user, after the authentication unit 12 determines that the authentication of the user is successful. For example, the acquisition unit 19 may acquire the user ID in S1 and acquire information on the remittee after the authentication unit 12 determines that the authentication of the user is successful. Thus, for a person who is attempting to impersonate others, it can be determined that authentication has failed at an earlier stage before inputting a remittee.

### (Second Example Embodiment)

### (Configuration of Second Example Embodiment)

Next, the configuration example of a second example embodiment will be described. In the second example embodiment, it is assumed that the authentication process described in the first example embodiment is performed a plurality of times until a certain service is provided. That is, in the second example embodiment, it is assumed that the input of information on the service to be received by the user and the authentication process of the user are repeated. In a case where the service to be received by the user is "remittance", as the information on services received by the user, for example, a remittee and a remittance amount may be inputted. The biometric data processing apparatus 101 and the server 300 of the second example embodiment perform the first authentication process after the user inputs the remittee, and perform the second authentication process after the user inputs the remittance amount.

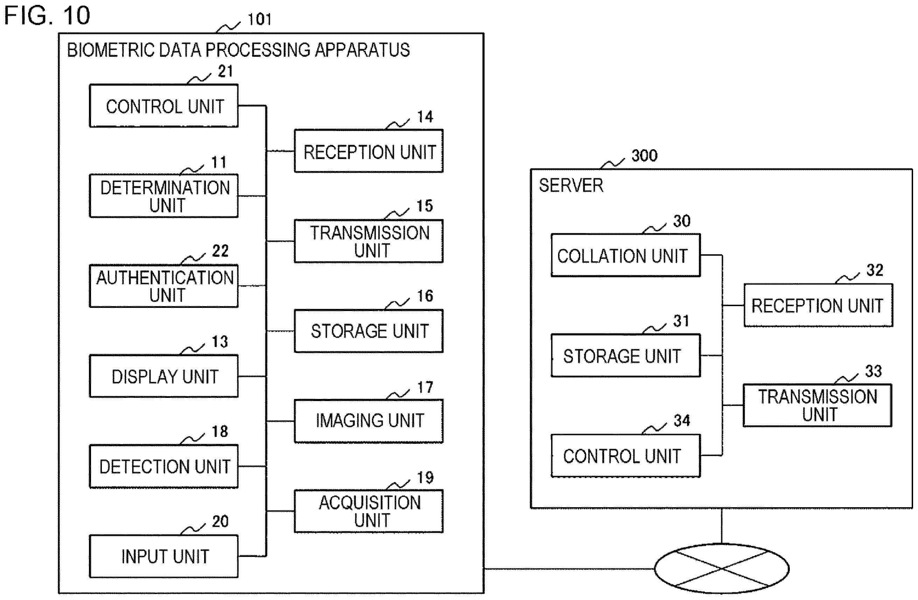

A configuration example of the second example embodiment is illustrated in FIG. 10. The biometric data processing apparatus 101 shown in FIG. 10 is different from the biometric data processing apparatus 100 of the first example embodiment in having a control unit 21 and an authentication unit 22. Since the rest of the configuration is the same as in the first example embodiment, the description will not be repeated.

In a case where the authentication process is performed a plurality of times, the control unit 21 makes the predetermined feature different from the previous feature depending on the authentication process. For example, the control unit 21 may cause the display unit 13 to display a message requesting input of biometric data having a first feature at the time of the first authentication process. Then, the control unit 21 may cause the display unit 13 to display a message requesting input of biometric data having a second feature different from the first feature at the time of the second authentication process.

More specifically, for example, the control unit 21 acquires information indicating the service to be received by the user from the acquisition unit 19. The information indicating the service to be received by the user may be information inputted by the user to the input unit 20. Then, the control unit 21 acquires an input request message corresponding to the information indicating the service to be received by the user from the storage unit 16. The inputted request message is a message for requesting the user to input information on the service. The inputted request message may be, for example, a message such as "Please input remittee. ", and "Please input remittance amount."

At this time, the control unit 21 acquires an input request message from the storage unit 16 depending on the number of times of the authentication process currently being executed. Then, the control unit 21 causes the display unit 13 to display the acquired input request message.

The storage unit 16 stores a plurality of input request messages in association with information indicating the service to be received by the user. In addition, the storage unit 16 stores a plurality of messages requesting input of a predetermined feature in association with information indicating the service to be received by the user. The input request message and the message requesting input of a predetermined feature stored in the storage unit 16 vary depending on the number of times of authentication.

For example, the storage unit 16 stores a message for the first authentication process "Please look to the right without moving the position of the face." and a message for the second authentication process "Please look to the left without moving the position of the face." in association with "remittance" which is a service to be received by the user. That is, the control unit 21 acquires from the storage unit 16 a message requesting input of different features depending on the authentication process. A feature value data may be associated with a message requesting input of a predetermined feature stored in the storage unit 16 similarly to the first example embodiment. In the case where the authentication of the user is determined successful in all authentication processes, the authentication unit 22 executes the process enabling the provision of the service to the user. For example, the authentication unit 22 determines whether or not the authentication of the user is successful in both of the first authentication process and the second authentication process. In a case where the authentication of the user is determined successful in both of the first authentication process and the second authentication process, the authentication unit 22 can provide the service to the user.

The process enabling the provision of the service to the user is a process that triggers a process of providing a service to a user. For example, the process enabling the provision of a service to a user may be the authentication unit 22 transmitting data indicating that the service can be provided to the server 300 through the transmission unit 15. Alternatively, the authentication unit 22 may transmit to the server 300 data indicating that the authentication of the user is determined to be successful in all authentication processes. The authentication unit 22 may further cause the transmission unit 15 to transmit information on the service to be received by the user.

The control unit 34 that has received these pieces of data from the authentication unit 22 provides the user with a service. For example, the control unit 34 may execute remittance from the user's savings account to the savings account of the remittee based on the information on the service to be received by the user.

### (Operation of Second Example Embodiment)

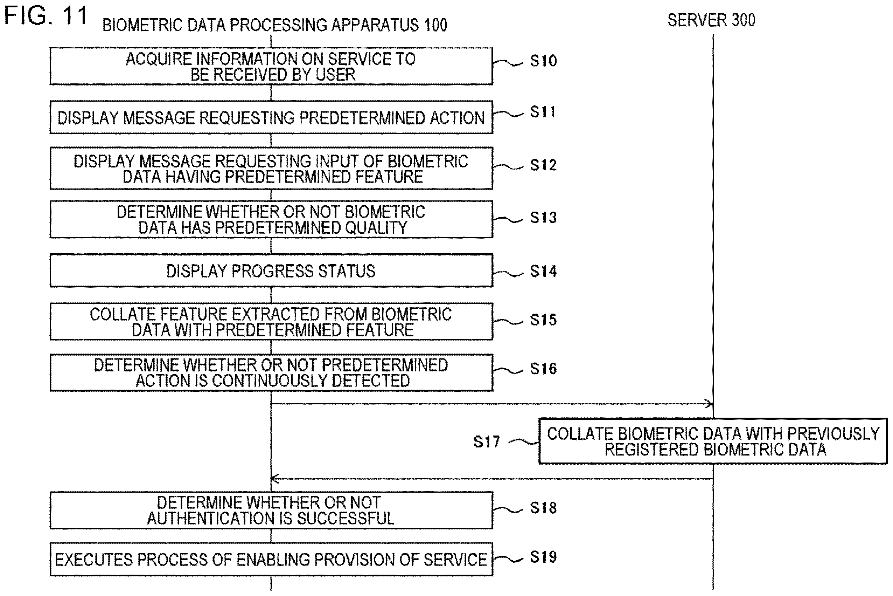

The operation of the second example embodiment will be described using a specific example. FIG. 11 is a sequence diagram showing an example of operations of the biometric data processing apparatus 101 and the server 300. The sequence diagram shown in FIG. 11 shows the operations performed following the sequence diagram shown in FIG. 2. Since the operations of S1 to S9 are the same as those in the first example embodiment, a description thereof will not be repeated. Since S10 to S18 are also similar to the operations of S1 to S9, the description will not be repeated.

Prior to S1, for example, the user inputs "remittance" as the service the user wants to receive to the input unit 20. The screen allowing the user to input the service may be displayed after the user activates the predetermined application. Then, the control unit 21 acquires information indicating the service to be received by the user from the input unit 20.

The control unit 21 acquires a message for the first authentication process from the storage unit 16 among the input request messages corresponding to the service "remittance" to be received by the user. For example, the storage unit 16 stores, as the message for the first authentication process, "Please input remittee." in association with "remittance" which is a service to be received by the user. For example, the storage unit 16 stores, as the message for the second authentication process, "Please input remittance amount." in association with "remittance" which is a service to be received by the user. Then, in the first authentication process, the control unit 21 acquires a message "Please input remittee." from the storage unit 16 and causes the display unit 13 to display the message.

A user viewing the display on the display unit 13 inputs information on the remitee through the input unit 20. An example of the input process by the user is as shown in FIG. 3 similarly to the first example embodiment. The acquiring unit 19 acquires information on the remittee from the input unit 20 as information on the service to be received by the user (S1). The control unit 21 may cause the display unit 13 to display information on the service to be received by the user, which is acquired by the acquisition unit 19. Thus, the user viewing the display unit 13 can determine whether his input is correct.

Since the operation of S2 is the same as that in the first example embodiment, a description thereof will not be repeated. Prior to the operation in S3, the control unit 21 acquires from the storage unit 16 a message requesting input of a predetermined feature. At this time, the control unit 21 acquires, from the storage unit 16, a message corresponding to the service "remittance" received by the user and requesting input of a predetermined feature for the first authentication process.

For example, the storage unit 16 stores the message "Please look to the right without moving the position of the face." requesting the input of a predetermined feature for the first authentication process in association with "remittance" which is a service to be received by the user. Further, the storage unit 16 stores the message "Please look to the left without moving the position of the face." requesting the input of a predetermined feature for the second authentication process in association with "remittance" which is a service to be received by the user. Then, in the second authentication process, the control unit 21 acquires the message "Please look to the right without moving the position of the face." from the storage unit 16, and causes the display unit 13 to display the message (S3).

Since the operations of S4 to S9 are the same as those in the first example embodiment, a description thereof will not be repeated. When the authentication unit 22 completes the operation of S9, the control unit 21 acquires a message for the second authentication process from the storage unit 16 among the input request messages corresponding to the service "remittance" received by the user. For example, as described above, the storage unit 16 stores, as the message for the second authentication process, "Please input remittance amount." in association with "remittance" which is a service to be received by the user. Then, the control unit 21 acquires a message "Please input remittance amount." from the storage unit 16 and causes the display unit 13 to display the message.

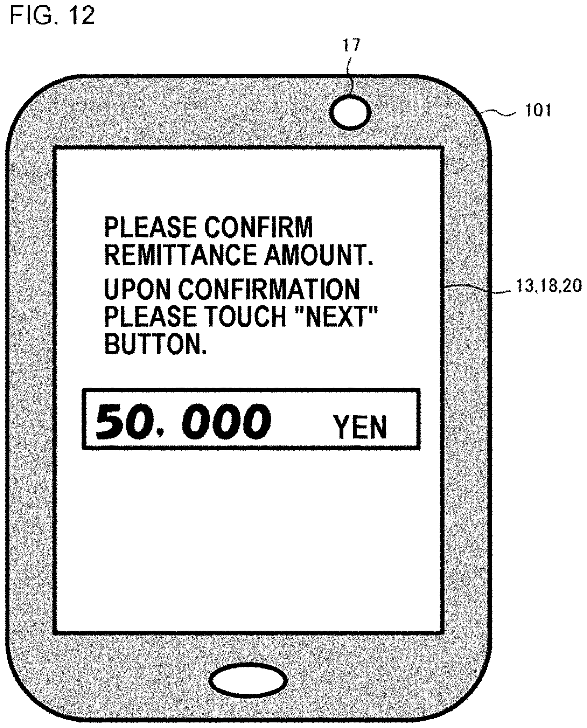

A user viewing the display on the display unit 13 inputs information on the remittance amount through the input unit 20. An example of an input process by the user is illustrated in FIG. 12. In FIG. 3, the display unit 13 displays information on the remittance amount which is inputted by the user. FIG. 3 shows that the user has inputted the information of "50,000 yen" to the biometric data processing apparatus 100. The user may input such information by touching the touch panel which is the input unit 20 with a finger. Further, the display unit 13 displays a message "Please confirm remittance amount. Upon confirmation please touch "next" button" prompting the user to check the information inputted by the user. The user viewing the display unit 13 confirms that the information inputted by the user inputs is correct and touches a portion of the display unit 13 where "next" is displayed.

Since the operation of S11 is the same as S2 in the first example embodiment, a description thereof will not be repeated. In a case where the detection unit 18 detects a predetermined action by the user, the control unit 21 acquires a message requesting an input of a predetermined feature from the storage unit 16. At this time, the control unit 21 acquires, from the storage unit 16, a message requesting input of biometric data having a feature different from that in the first authentication process, and causes the display unit 13 to display the message.

More specifically, the control unit 21 acquires, from the storage unit 16, a message corresponding to the service "remittance" received by the user and requesting input of a predetermined feature for the second authentication process. For example, as described above, the storage unit 16 stores, as the message for the second authentication process, "Please look to the left without moving the position of the face." in association with "remittance" which is a service to be received by the user. Then, the control unit 21 acquires "Please look to the left without moving the position of the face." from the storage unit 16, and causes the display unit 13 to display the message (S12).

Since the operations of S13 to S17 are the same as those in the first example embodiment, a description thereof will not be repeated. As in the first example embodiment, the authentication unit 22 determines whether or not the authentication of the user is successful, based on the data received from the server 300 (S18). For example, the reception unit 14 in the biometric data processing apparatus 100 receives data indicating that the second score calculated by the collation is equal to or more than the predetermined threshold value. Since data indicating that the second score calculated by the collation is equal to or more than the predetermined threshold value is acquired, the authentication unit 22 determines that the authentication of the user is successful.

Further, the authentication unit 22 determines whether or not the authentication of the user has been determined to be successful in all authentication processes. In the present example embodiment, it is assumed that the authentication unit 22 determines that the authentication of the user is successful in all authentication processes in a case where the authentication of the user is determined successful both in S9 and S18. On the other hand, it is assumed that the authentication unit 22 determines that the authentication of the user is unsuccessful in all authentication processes in a case where the authentication of the user is determined to have failed in S9 or S18.

The authentication unit 22 executes a process of enabling provision of a service to the user, in a case where the authentication of the user is determined successful in all authentication processes (S19). For example, the authentication unit 22 transmits data indicating that the service can be provided to the server 300 through the transmission unit 15. Further, the authentication unit 22 causes the transmitting unit 15 to transmit the information on the service to be received by the user, which is acquired by the acquisition unit 19.

The control unit 34 that has received these pieces of data from the authentication unit 22 provides the user with a service. For example, the control unit 34 may execute remittance of money from the user's savings account to the savings account of the remittee based on the information on the service to be received by the user. For example, the control unit 34 acquires data indicating that the service can be provided, data on the remittee such as the bank name "Nichiden Bank", the branch name "Mita branch", the type "savings account", the account number "134567", and the recipient "Hanako Nichiden", and data on the remittance amount of "50,000 yen". Further, the control unit 34 acquires the user ID, for example. Then, the control unit 34 executes a process of remitting 50,000 to the account of the remittee from the user's account identified from the user ID. Further, the control unit 34 may transmit to the biometric data processing apparatus 101 data indicating that the remittance process has been completed.

The control unit 21 in the biometric data processing apparatus 101 may cause the display unit 13 to display a message indicating that the remittance process has been completed. For example, the control unit 21 may cause the display unit 13 to display a message "Remittance process completed".

In a case where the authentication unit 22 determines that not all authentication processes of the authentication of the user has been determined successful, the authentication unit 22 may transmit data indicating that the service cannot be provided to the server 300 through the transmission unit 15. In this case, the control unit 34 may not provide a service to the user.

Further, the control unit 21 may cause the display unit 13 to display a message indicating that the service cannot be provided. For example, the control unit 21 may cause the display unit 13 to display a message "Because authentication has failed, remittance process cannot be executed. Sorry to trouble you, please try again from the beginning."

Since the biometric data processing apparatus 101 of the present example embodiment makes the predetermined feature different from the previous feature according to the authentication process, the effect of preventing impersonation of another person is further enhanced. This is because it is difficult for an impersonator to prepare biometric data of another person having various features in advance.

In a case where the authentication of the user has been determined to have failed in any one of the authentication processes performed more than once, the biometric data processing apparatus 101 may not perform the next authentication process. For example, in a case where the authentication of the user has been determined to have failed in the first authentication process in the present example embodiment, the biometric data processing apparatus 101 may not perform the operations after S10 in the second authentication process. Thus, the biometric data processing apparatus 101 may end the process at an early stage without repeating the authentication process for a person attempting to impersonate another person.

### (Third Example Embodiment)

### (Configuration of Third Example Embodiment)

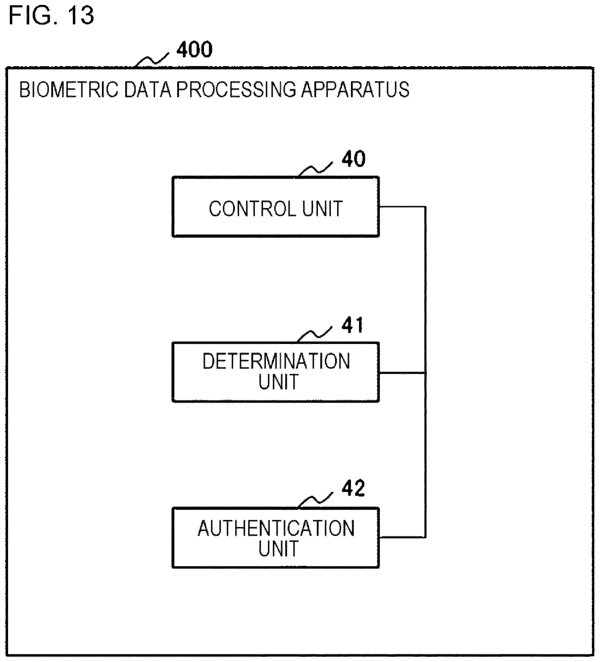

A third example embodiment will be described. FIG. 13 illustrates a configuration example of a biometric data processing apparatus 400 in the third example embodiment. The biometric data processing apparatus 400 includes a control unit 40, a determination unit 41, and an authentication unit 42.

The control unit 40 causes the display unit to display a message requesting the user to perform a predetermined action. The display unit may be a constituent element in the biometric data processing apparatus 400 or may be implemented by another apparatus connected to the biometric data processing apparatus 400. Further, in a case where the biometric data of the user is determined to have the predetermined quality, the control unit 40 causes the display unit to display a progress status of the whole authentication process.

The determination unit 41 determines whether or not biometric data of the user has a predetermined quality.

The authentication unit 42 determines that the authentication of the user is successful, in a case where a first score calculated by collating the biometric data of the user with previously-registered biometric data is equal to or more than a predetermined threshold value and the detection unit continuously detects the predetermined action from when a detection unit first detects a predetermined action after the message is displayed until an authentication process in the biometric data processing apparatus is ended.

The authentication unit 42 or the determination unit 41 may determine whether or not the first score calculated by collating the biometric data of the user and biometric data which previously registered is equal to or more than a predetermined threshold value. Alternatively, other apparatuses connected to the biometric data processing apparatus 400 may determine whether or not the second score calculated by collating the biometric data of the user and the previously registered biometric data is equal to or more than a predetermined threshold value.

The authentication unit 42 or the determination unit 41 may determine whether or not the detection unit continuously detects the predetermined action from when the detection unit first detects the predetermined action after the message is displayed until the authentication process in the biometric data processing apparatus is ended. Alternatively, another apparatus connected to the biometric data processing apparatus 400 may determine whether or not the detection unit continuously detects the predetermined action from when the detection unit first detects the predetermined action after the message is displayed until the authentication process in the biometric data processing apparatus is ended.

The detection unit may be a constituent element in the biometric data processing apparatus 400 or may be implemented by another apparatus connected to the biometric data processing apparatus 400.

The biometric data processing apparatus 400 of the second example embodiment determines that the authentication of the user is successful, in a case where the detection unit continuously detects the predetermined action from when the detection unit first detects a predetermined action after the message is displayed until an authentication process in the biometric data processing apparatus is ended. Thus, the biometric data processing apparatus 400 prevents an erroneous operation of a user occurring during the authentication process in the biometric data processing apparatus 400. Further, the biometric data processing apparatus 400 causes the display unit to display the progress status of the whole authentication process in the biometric data processing apparatus. Thus, since the user can know the time required for the remaining authentication process, the biometric data processing apparatus 400 can prevent an increase in stress of the user.

### (Fourth Example Embodiment)

### (Configuration of Fourth Example Embodiment)

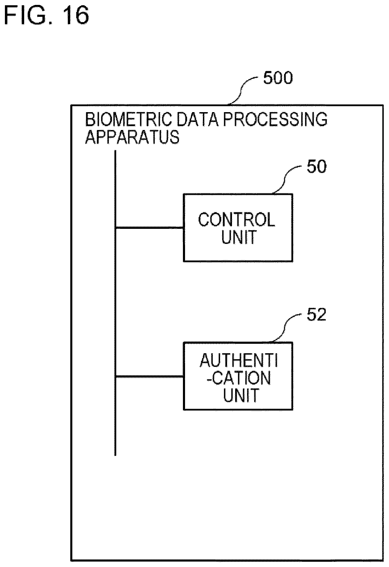

A fourth example embodiment will be described. FIG. 16 illustrates a configuration example of a biometric data processing apparatus 500 in the fourth example embodiment. The biometric data processing apparatus 500 includes a control unit 50, and an authentication unit 52.

The control unit 50 causes the display unit to display a message requesting the user to perform a predetermined action. The display unit may be a constituent element in the biometric data processing apparatus 500 or may be implemented by another apparatus connected to the biometric data processing apparatus 500.

The authentication unit 52 determines that the authentication of the user is successful, in a case where a first score calculated by collating the biometric data of the user with previously-registered biometric data is equal to or more than a predetermined threshold value and the detection unit continuously detects the predetermined action from when the detection unit first detects the predetermined action after the message is displayed until an authentication process in the biometric data processing apparatus is ended.

The authentication unit 52 may determine whether or not the first score calculated by collating the biometric data of the user and biometric data which previously registered is equal to or more than a predetermined threshold value. Alternatively, another apparatus (for example, the server 300) connected to the biometric data processing apparatus 500 may determine whether or not the second score calculated by collating the biometric data of the user with the previously registered biometric data is equal to or more than a predetermined threshold value.

The authentication unit 52 may determine whether or not the detection unit continuously detects the predetermined action from when the detection unit first detects the predetermined action after the message is displayed until the authentication process in the biometric data processing apparatus is ended. Alternatively, another apparatus (for example, the server 300) connected to the biometric data processing apparatus 500 may determine whether or not the detection unit continuously detects the predetermined action from when the detection unit first detects the predetermined action after the message is displayed until the authentication process in the biometric data processing apparatus is ended.

The detection unit may be a constituent element in the biometric data processing apparatus 500 or may be implemented by another apparatus connected to the biometric data processing apparatus 500.

The biometric data processing apparatus 500 of the fourth example embodiment determines that the authentication of the user is successful, in a case where the detection unit continuously detects the predetermined action from when the detection unit first detects a predetermined action after the message is displayed until an authentication process in the biometric data processing apparatus 500 is ended. Thus, the biometric data processing apparatus 500 prevents an erroneous operation of a user occurring during the authentication process in the biometric data processing apparatus 500.

### (Fifth Example Embodiment)

### (Configuration of Fifth Example Embodiment)

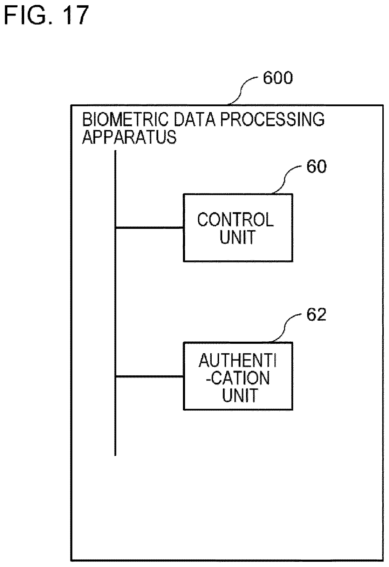

A fifth example embodiment will be described. FIG. 17 illustrates a configuration example of a biometric data processing apparatus 600 in the fifth example embodiment. The biometric data processing apparatus 600 includes a control unit 60 and an authentication unit 62.

The control unit 60 displays, on a display unit, a message requesting a user to input biometric data having a predetermined feature. The display unit may be a constituent element in the biometric data processing apparatus 600 or may be implemented by another apparatus connected to the biometric data processing apparatus 600.

The authentication unit 62 determines that the authentication of the user is successful, in a case where the first score calculated by collating the biometric data of the user with the previously-registered biometric data is equal to or more than a predetermined threshold value and the first score calculated by collating a feature extracted from the biometric data with the predetermined feature is equal to or more than a predetermined threshold value.

The authentication unit 62 may determine whether or not the first score calculated by collating the biometric data of the user and the previously registered biometric data is equal to or more than a predetermined threshold value. Alternatively, another apparatus (for example, the server 300) connected to the biometric data processing apparatus 600 may determine whether or not the second score calculated by collating the biometric data of the user with the previously registered biometric data is equal to or more than a predetermined threshold value.

The detection unit may be a constituent element in the biometric data processing apparatus 600 or may be implemented by another apparatus connected to the biometric data processing apparatus 600.

In the authentication process using biometric data, there may be persons impersonating another person to attempt to succeed in authentication by using biometric data of the other person acquired in advance. In the biometric data processing apparatus 600 of the fifth example embodiment, the control unit 60 causes the display unit to display a message requesting an input of biometric data having a predetermined feature. Further, in a case where a first score calculated by collating a feature extracted from the biometric data with the predetermined feature is equal to or more than a predetermined threshold value, the authentication unit 62 determines that the authentication of the user is successful.

Thus, even if a person attempting to wrongfully receive a service by impersonating a user has acquired biometric data of the user in advance, the authentication of this person would fail. This is because the person to be authenticated does not know what type of biometric data having what type of feature needs to be inputted, until a message is displayed on the display unit. Therefore, the biometric data processing apparatus 600 of the fifth example embodiment can prevent impersonation of others.

### (Hardware Configuration)

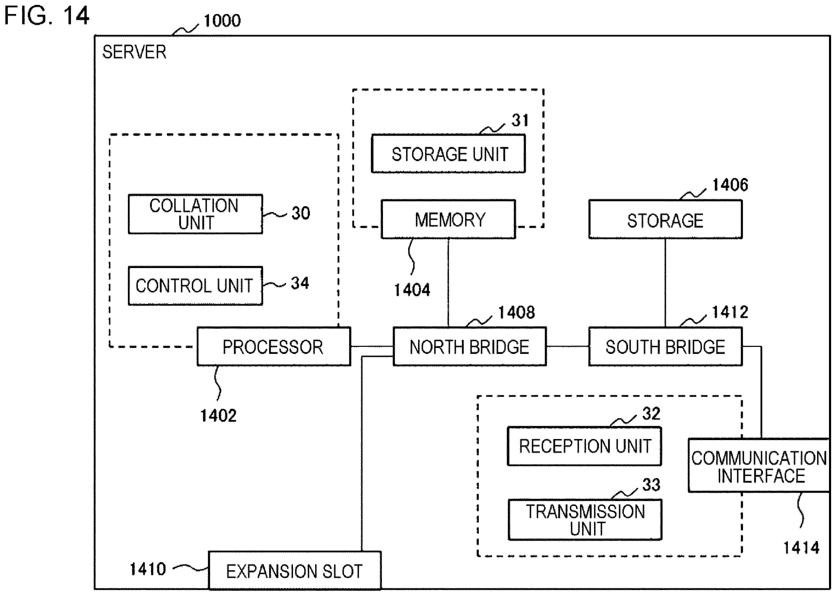

Next, an example of a hardware configuration will be described. FIG. 14 is a diagram showing a hardware configuration example of the server 300 described in the above example embodiment. The server 1000 in FIG. 14 may be any general computer. For example, the server 1000 may be a server, a notebook PC, a desktop PC, a workstation, a blade server, or the like. Further, the server 1000 may be communicatively connected to another server, a computer, or the like.

In FIG. 14, the server 1000 includes a processor 1402, a memory 1404, a storage 1406, a north bridge 1408 connected to the memory 1404, and an expansion slot 1410. The server 1000 further includes a communication interface 1414 and a south bridge 1412 connected to the storage 1406. These components are connected to each other by a bus and fixed to the mother board.

The processor 1402 reads and executes the instructions stored in the memory 1404, the storage 1406, and the like. The processor 1402 may execute instructions to display video on a display apparatus (not shown). The processor 1402 reads the programs stored in the memory 1404 and the storage 1406 and executes the instructions. The processor 1402 may be a circuit such as a central processing unit (CPU) and application specific integrated circuits (ASICs).

Further, the processor 1402 may implement the functions of the collation unit 30 and the control unit 34 of the server 300.

The memory 1404 is a computer readable storage medium that stores information. The memory 1404 may be a volatile storage medium such as a random access memory (RAM) or a nonvolatile storage medium such as a read only memory (ROM). Further, the memory 1404 may be an optical disk, a magnetic disk, or the like. The storage 1406 may be a large-capacity computer readable storage medium. The storage 1406 may be, for example, a floppy (registered trademark) disk, a hard disk drive, an optical disk, a flash memory, or the like. Instructions included in a computer program stored in a computer readable storage medium are executed to achieve the above-described example embodiments. The memory 1404 may implement the storage unit 31 of the server 300.

The north bridge 1408 connects parts that are brains of the computer, such as a CPU and a memory, and controls the timing and speed to transfer data. The north bridge 1408 bridges data among apparatuses that operate primarily at high speed. On the other hand, the south bridge 1412 bridges data among apparatuses that operate primarily at low speed. For example, the north bridge 1408 may be connected to the memory 1404, a display apparatus (not shown), and the expansion slot 1410 that can accept expansion cards (not shown). Further, the south bridge 1412 may be connected to the storage 1406 and the communication interface 1414.

The communication interface 1414 may include various communication ports such as universal serial bus (USB), Bluetooth (registered trademark), Ethernet (registered trademark), and Wireless Ethernet. In addition, these communication ports may be connected to one or more input and output apparatuses, for example, communication apparatuses such as a keyboard, a pointing device, a scanner, a wireless local area network (LAN) adapter, and a router. That is, the server 1000 may be connected to the biometric data processing apparatus through the communication interface 1414. Further, the communication interface 1414 may include a wireless LAN adapter. The communication interface 1414 may implement functions of the reception unit 32 and the transmission unit 33 of the server 300.

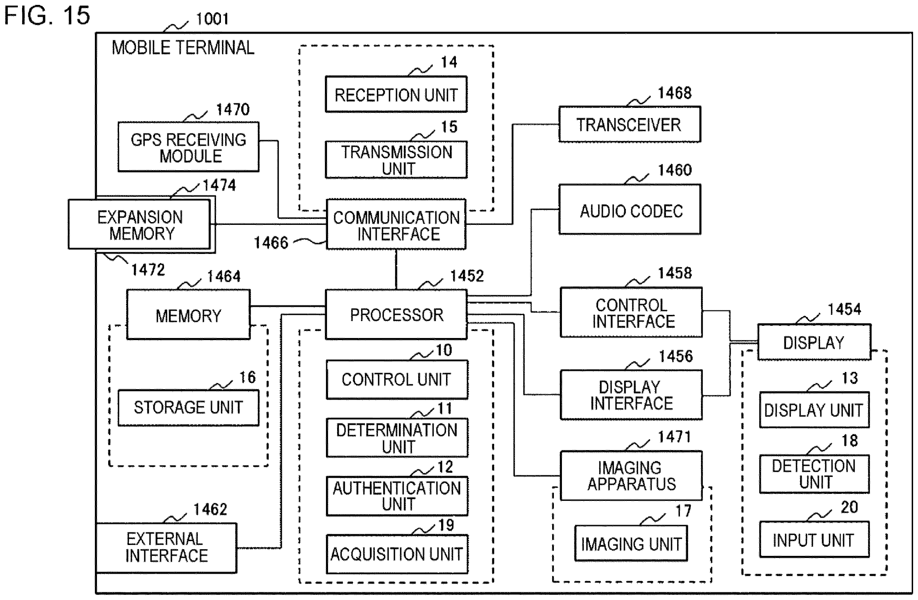

FIG. 15 is a diagram showing an example of a hardware configuration of the mobile terminal 1001 that implements the biometric data processing apparatuses 100, 101, 400, 500, and 600 described in the above example embodiments. The mobile terminal 1001 shown in FIG. 15 will be described. The mobile terminal 1001 may be a mobile terminal such as a mobile phone, a smart phone, and a personal digital assistant (PDA).

The mobile terminal 1001 may include a display 1454, a transceiver 1468, an audio codec 1460, a control interface 1458, a display interface 1456, and an imaging apparatus 1471. Further, the mobile terminal 1001 may further include a communication interface 1466, a processor 1452, a global positioning system (GPS) receiving module 1470, an expansion memory 1474, a memory 1464, and an external interface 1462.

The display 1454 may be, for example, a Thin-Film Transistor Liquid Crystal Display (TFT LCD), an Organic Light Emitting Diode (OLED) display, or other displays. Further, the display may be connected to the control interface 1458 and the display interface 1456. The display 1454 may have a touch panel. The processor 1452 may exchange information with the user of the mobile terminal 1001 through the control interface 1458 and the display interface 1456. The display 1454 may implement functions of the display unit 13, the detection unit 18, and the input unit 20 of the biometric data processing apparatuses 100, 101 and the like.

The display interface 1456 may be configured by a circuit. The display interface 1456 controls the display to display video and other information to the user. The control interface 1458 receives a command from the user. Then, the control interface 1458 may convert the received command to send it to the processor 1452.

Further, the mobile terminal 1001 may have an external interface 1462 enabling communication between an external apparatus (for example, the server 1000) and the processor 1452. The external interface 1462 may provide wired communication or wireless communication to the mobile terminal 1001.

The expansion memory 1474 is connected to the mobile terminal 1001 through an extension interface 1472. Further, the expansion memory 1474 may include a Single In Line Memory Module (SIMM) card interface, for example. Further, the expansion memory 1474 may give an additional storage area to the mobile terminal 1001, and may store the application and other information. Further, the expansion memory 1474 may store information on security. The expansion memory 1474 may function as a security management device of the mobile terminal 1001. For example, an instruction for realizing safe use of the mobile terminal 1001 is programmed in the expansion memory 1474.

The mobile terminal 1001 performs wireless communication through the communication interface 1466. That is, the mobile terminal 1001 may communicate with the server 1000 through the communication interface 1466. The communication interface 1466 may implement the functions of the reception unit 14 and the transmission unit 15 of the biometric data processing apparatuses 100 and 101.

The communication interface 1466 may include a digital signal processing circuit. The communication interface 1466 may realize communication under modes and protocols such as Global System for Mobile Communication (GMS), Short Message Service (SMS), and Enhanced Messaging Service (EMS). Alternatively, the communication interface 1466 may realize communication under modes and protocols such as Multimedia Messaging Service (MMS), Code Division Multiple Access (CDMA), and Time Division Multiple Access (TDMA).

Further, the communication interface 1466 may realize communication under modes and protocols such as Personal Digital Cellular (PDC), Wideband Code Division Multiple Access (WCDMA (registered trademark)), CDMA 2000, General Packet Radio Service (GPRS). The above-described communication is generated, for example, through the transceiver 1468. Further, narrow band communication, for example, communication using Bluetooth (registered trademark), Wi-Fi (registered trademark), or the like may also be generated through the transceiver 1468.

The GPS reception module 1470 may provide data used by an application operating on the mobile terminal 1001. The data may be, for example, position or data related to navigation.

Further, the mobile terminal 1001 may perform sound communication through the audio codec 1460. The audio codec 1460 acquires sound information from the user and converts it into a form that can be used as digital information. Further, the audio codec 1460 generates sound that the user can hear. The information handled by the audio codec 1460 may be a sound call, a recorded sound (such as a voice message and a music file), a sound generated by an application on the mobile terminal 1001, or the like.

Since the processor 1452 and the memory 1464 are the same as those of the server 1000, the description thereof will not be repeated. The processor 1452 may implement the functions of the control unit 10, the determination unit 11, the authentication unit 12, and the acquisition unit 19 of the biometric data processing apparatuses 100, 101 and the like. That is, by reading the program stored in the memory 1464, the processor 1452 may implement functions of the control unit 10, the determination unit 11, the authentication unit 12, and the acquisition unit 19 of the biometric data processing apparatuses 100, 101, and the like. The memory 1464 may implement the function of the storage unit 16.

The imaging apparatus 1471 may be a camera having, for example, a charge coupled device (CCD) sensor, a complementary meta oxide semiconductor (CMOS) sensor, an image processor, and the like. The imaging apparatus 1471 converts the received light into image data to generate image data.

The above-described example embodiments are only examples that embody the present invention, and various modifications can be made within the scope of invention defined by the independent claims.

Further, the configurations described in the example embodiments can be combined.

## Claims

1. A biometric data processing system comprising a biometric data processing apparatus (100) and a server apparatus (300);
the biometric data processing apparatus (100) comprising a control unit (10), a determination unit (11), an authentication unit (12), a display unit (13), a detection unit (18), and an input unit (20);
the server apparatus (300) comprising a collation unit (30) and a storage unit (31) storing biometric data of the users of the system;
wherein the system is configured to execute the following operations:
the control unit (10) causes the display unit (13) to display a message requesting a user to perform a predetermined action;
if the detection unit (18) detects the predetermined action by the user, then the control unit (10) causes the display unit (13) to further display a message requesting an input of a type of biometric data having a type of feature, whereby the person to be authenticated does not know what type of biometric data having what type of feature needs to be inputted, until this message is displayed on the display unit (13);
the determination unit (11) collates the feature extracted from the biometric data with a predetermined feature to calculate a first score, and determines whether the first score is equal to or more than a predetermined threshold value;
if the first score is equal to or more than the predetermined threshold value, then the authentication unit (12) determines whether or not the detection unit (18) continuously detects the predetermined action, and the determination unit (11) causes a transmission of the feature extracted from the biometric data to the server (300);
the collation unit (30) collates the feature extracted from the biometric data with the previously registered biometric data of the user, which previously registered data is stored in the storage unit (31), to calculate a second score, determines whether or not the second score is equal to or more than a predetermined threshold value, and causes a transmission of the determination result to the biometric data processing apparatus (100); and
if the second score is equal to or more than the predetermined threshold value and the detection unit (18) continuously detects the predetermined action and the first score is equal to or more than the predetermined threshold value, then the authentication unit (12) determines that the authentication of the user is successful.

2. The biometric data processing system according to claim 1, wherein the
determination unit (11) determines whether or not the biometric data of the user has a predetermined quality,
wherein in a case where the biometric data of the user is determined to have the predetermined quality, the control unit displays a progress status of a whole authentication process on the display unit.

3. The biometric data processing system according to claim 1 or 2, further comprising:
an acquisition unit (19) configured to acquire, from the input unit (20), information on a service to be received by the user,
wherein in a case where the authentication process is performed more than once, the control unit (10) is configured to display on the display unit (13) a message requesting the input of a type of feature that is different for each authentication process, and
wherein the authentication unit (12) executes a process of enabling provision of the service to the user, in a case where the authentication of the user is determined successful in all the authentication processes.

4. The biometric data processing system according to any one of claims 1 to 2, further comprising:
an acquisition unit (19) that acquires, from an input unit (20), information on a service to be received by the user, wherein the authentication unit (19) executes a process of enabling provision of the service to the user, in a case where the authentication of the user is determined to be successful.

5. A biometric data processing method executed by a biometric data processing system, the biometric data processing system comprising a biometric data processing apparatus (100) and a server apparatus (300),
the biometric data processing apparatus (100) comprising a control unit (10), a determination unit (11), an authentication unit (12), a display unit (13), a detection unit (18), and an input unit (20),
and the server apparatus (300) comprising a collation unit (30) and a storage unit (31) storing biometric data of the users of the system;
wherein the method comprises the following steps:
by the control unit (10), causing the display unit (13) to display a message requesting a user to perform a predetermined action;
by the detection unit (18) determining if the predetermined action by the user is detected, and if the predetermined action by the user is detected then, by the control unit (10), causing the display unit (13) to further display a message requesting an input of a type of biometric data having a type of feature, whereby the person to be authenticated does not know what type of biometric data having what type of feature needs to be inputted, until the message is displayed on the display unit (13);
by the determination unit (11), collating the feature extracted from the biometric data with a predetermined feature to calculate a first score, and determining whether the first score is equal to or more than a predetermined threshold value;
if the first score is equal to or more than the predetermined threshold value, then by the authentication unit (12) determining whether or not the detection unit (18) continuously detects the predetermined action, and by the determination unit (11) causing a transmission of the feature extracted from the biometric data to the server (300);
by the collation unit (30), collating the feature extracted from the biometric data with the previously registered biometric data of the user, which previously registered data is stored in the storage unit (31), to calculate a second score, and determining whether or not the second score is equal to or more than a predetermined threshold value, and causing a transmission of the determination result to the biometric data processing apparatus (100); and,
if the second score is equal to or more than the predetermined threshold value and the detection unit (18) continuously detects the predetermined action and the first score is equal to or more than the predetermined threshold value, then by the authentication unit (12) determining that the authentication of the user is successful.

6. A computer program which when executed on a computer causes the computer to perform the steps of method claim 5.

## Patentansprüche

1. Biometrisches Datenverarbeitungssystem, das eine Biometrische-Daten-Verarbeitungsvorrichtung (100) und eine Servervorrichtung (300) umfasst;
wobei die Biometrische-Daten-Verarbeitungsvorrichtung (100) eine Steuereinheit (10), eine Feststellungseinheit (11), eine Authentifizierungseinheit (12), eine Anzeigeeinheit (13), eine Detektionseinheit (18) und eine Eingabeeinheit (20) umfasst;
wobei die Servervorrichtung (300) eine Kollationierungseinheit (30) und eine Speichereinheit (31) umfasst, die biometrische Daten der Benutzer des Systems speichert;
wobei das System zum Ausführen der folgenden Operationen konfiguriert ist:
Veranlassen, durch die Steuereinheit (10), der Anzeigeeinheit (13) zum Anzeigen einer Nachricht, die einen Benutzer zum Durchführen einer vorbestimmten Aktion auffordert;
Veranlassen, durch die Steuereinheit (10), wenn die Detektionseinheit (18) die vorbestimmte Aktion des Benutzers erkennt, der Anzeigeeinheit (13) zum Anzeigen einer Nachricht, die zur Eingabe eines Typs von biometrischen Daten mit einem Merkmalstyp auffordert, wobei die zu authentifizierende Person erst dann weiß, welcher Typ von biometrischen Daten mit welchem Merkmalstyp eingegeben werden muss, wenn diese Nachricht auf der Anzeigeeinheit (13) angezeigt wird;
Kollationieren, durch die Feststellungseinheit (11), des aus den biometrischen Daten extrahierten Merkmals mit einem vorbestimmten Merkmal, um eine erste Punktzahl zu berechnen, und Feststellen, ob die erste Punktzahl so groß wie oder größer als ein vorbestimmter Schwellenwert ist;
durch die Authentifizierungseinheit (12), Feststellen, wenn die erste Punktzahl so groß wie oder größer als der vorbestimmte Schwellenwert ist, ob die Detektionseinheit (18) kontinuierlich die vorbestimmte Aktion detektiert oder nicht, und Veranlassen, durch die Feststellungseinheit (11), der Übertragung des aus den biometrischen Daten extrahierten Merkmals zu dem Server (300);
durch die Kollationierungseinheit (30), Kollationieren des aus den biometrischen Daten extrahierten Merkmals mit den in der Speichereinheit (31) gespeicherten zuvor registrierten biometrischen Daten des Benutzers, um eine zweite Punktzahl zu berechnen, Feststellen, ob die zweite Punktzahl so groß wie oder größer als ein vorbestimmter Schwellenwert ist oder nicht, und Veranlassen der Übertragung des Feststellungsergebnisses zu der Biometrische-Daten-Verarbeitungsvorrichtung (100); und
durch die Authentifizierungseinheit (12), Feststellen, dass die Authentifizierung des Benutzers erfolgreich ist, wenn die zweite Punktzahl so groß wie oder größer als der vorbestimmte Schwellenwert ist und die Detektionseinheit (18) kontinuierlich die vorbestimmte Aktion detektiert und die erste Punktzahl so groß wie oder größer als der vorbestimmte Schwellenwert ist.

2. Biometrisches Datenverarbeitungssystem nach Anspruch 1, wobei die Feststellungseinheit (11) feststellt, ob die biometrischen Daten des Benutzers eine vorbestimmte Qualität haben oder nicht,
wobei in einem Fall, in dem festgestellt wird, dass die biometrischen Daten des Benutzers die vorbestimmte Qualität haben, die Steuereinheit einen Fortschrittsstatus eines gesamten Authentifizierungsprozesses auf der Anzeigeeinheit anzeigt.

3. Biometrisches Datenverarbeitungssystem nach Anspruch 1 oder 2, das ferner Folgendes umfasst:
eine Erfassungseinheit (19), die zum Erfassen von Informationen über einen vom Benutzer zu empfangenden Dienst von der Eingabeeinheit (20) konfiguriert ist,
wobei in einem Fall, in dem der Authentifizierungsprozess mehr als einmal durchgeführt wird, die Steuereinheit (10) zum Anzeigen einer Nachricht auf der Anzeigeeinheit (13) konfiguriert ist, die die Eingabe eines Merkmalstyps anfordert, der für jeden Authentifizierungsprozess unterschiedlich ist, und
wobei die Authentifizierungseinheit (12) einen Prozess der Freigabe der Bereitstellung des Dienstes für den Benutzer in einem Fall ausführt, in dem die Authentifizierung des Benutzers in allen Authentifizierungsprozessen als erfolgreich festgestellt wird.

4. Biometrisches Datenverarbeitungssystem nach einem der Ansprüche 1 bis 2, das ferner Folgendes umfasst:
eine Erfassungseinheit (19), die von einer Eingabeeinheit (20) Informationen über einen vom Benutzer zu empfangenden Dienst erfasst, wobei die Authentifizierungseinheit (19) einen Prozess zur Freigabe der Bereitstellung des Dienstes für den Benutzer ausführt, wenn die Authentifizierung des Benutzers als erfolgreich festgestellt wird.

5. Biometrische-Daten-Verarbeitungsverfahren, ausgeführt von einem biometrischen Datenverarbeitungssystem, wobei das Biometrische-Daten-Verarbeitungssystem eine Biometrische-Daten-Verarbeitungsvorrichtung (100) und eine Servervorrichtung (300) umfasst,
wobei die Biometrische-Daten-Verarbeitungsvorrichtung (100) eine Steuereinheit (10), eine Feststellungseinheit (11), eine Authentifizierungseinheit (12), eine Anzeigeeinheit (13), eine Detektionseinheit (18) und eine Eingabeeinheit (20) umfasst;
und wobei die Servervorrichtung (300) eine Kollationierungseinheit (30) und eine Speichereinheit (31) umfasst, die biometrische Daten der Benutzer des Systems speichert;
wobei das Verfahren die folgenden Schritte beinhaltet:
durch die Steuereinheit (10), Veranlassen der Anzeigeeinheit (13) zum Anzeigen einer Nachricht, die einen Benutzer zum Durchführen einer vorbestimmten Aktion auffordert;
durch die Detektionseinheit (18), Feststellen, ob die vorbestimmte Aktion des Benutzers detektiert wird und, wenn die vorbestimmte Aktion des Benutzers detektiert wird, dann, durch die Steuereinheit (10), Veranlassen der Anzeigeeinheit (13) zum Anzeigen einer Nachricht, die zur Eingabe eines Typs von biometrischen Daten mit einem Merkmalstyp auffordert, wobei die zu authentifizierende Person erst dann weiß, welcher Typ von biometrischen Daten mit welchem Merkmalstyp eingegeben werden muss, wenn diese Nachricht auf der Anzeigeeinheit (13) angezeigt wird;
durch die Feststellungseinheit (11), Kollationieren des aus den biometrischen Daten extrahierten Merkmals mit einem vorbestimmten Merkmal, um eine erste Punktzahl zu berechnen, und Feststellen, ob die erste Punktzahl so groß wie oder größer als ein vorbestimmter Schwellenwert ist;
durch die Authentifizierungseinheit (12), Feststellen, wenn die erste Punktzahl so groß wie oder größer als der vorbestimmte Schwellenwert ist, ob die Detektionseinheit (18) kontinuierlich die vorbestimmte Aktion detektiert oder nicht, und, durch die Feststellungseinheit (11), Veranlassen der Übertragung des aus den biometrischen Daten extrahierten Merkmals zu dem Server (300);
durch die Kollationierungseinheit (30), Kollationieren des aus den biometrischen Daten extrahierten Merkmals mit den in der Speichereinheit (31) gespeicherten zuvor registrierten biometrischen Daten des Benutzers, um eine zweite Punktzahl zu berechnen, Feststellen, ob die zweite Punktzahl so groß wie oder größer als ein vorbestimmter Schwellenwert ist oder nicht, und Veranlassen der Übertragung des Feststellungsergebnisses zu der Biometrische-Daten-Verarbeitungsvorrichtung (100); und
durch die Authentifizierungseinheit (12), Feststellen, dass die Authentifizierung des Benutzers erfolgreich ist, wenn die zweite Punktzahl so groß wie oder größer als der vorbestimmte Schwellenwert ist und die Detektionseinheit (18) kontinuierlich die vorbestimmte Aktion detektiert und die erste Punktzahl so groß wie oder größer als der vorbestimmte Schwellenwert ist.

6. Computerprogramm, das bei Ausführung auf einem Computer den Computer zum Ausführen der Schritte des Verfahrens nach Anspruch 5 veranlasst.

## Revendications

1. Système de traitement de données biométriques comprenant un appareil de traitement de données biométriques (100) et un appareil serveur (300) ;
l'appareil de traitement de données biométriques (100) comprenant une unité de commande (10), une unité de détermination (11), une unité d'authentification (12), une unité d'affichage (13), une unité de détection (18) et une unité d'entrée (20) ;
l'appareil serveur (300) comprenant une unité de collationnement (30) et une unité de stockage (31) stockant des données biométriques des utilisateurs du système ;
où le système est configuré pour exécuter les opérations suivantes :
l'unité de commande (10) fait que l'unité d'affichage (13) affiche un message demandant à un utilisateur de faire une action prédéterminée ;
si l'unité de détection (18) détecte l'action prédéterminée par l'utilisateur, alors l'unité de commande (10) fait que l'unité d'affichage (13) affiche en outre un message demandant une entrée d'un type de données biométriques ayant un type de caractéristique, en vertu de quoi la personne à authentifier ne sait pas quel type de données biométriques ayant quel type de caractéristique a besoin d'être entré jusqu'à ce que ce message soit affiché sur l'unité d'affichage (13) ;
l'unité de détermination (11) collationne la caractéristique extraite des données biométriques avec une caractéristique prédéterminée pour calculer un premier score, et détermine si le premier score est égal ou supérieur à une valeur seuil prédéterminée ;
si le premier score est égal ou supérieur à la valeur seuil prédéterminée, alors l'unité d'authentification (12) détermine si l'unité de détection (18) détecte ou non continuellement l'action prédéterminée, et l'unité de détermination (11) cause une transmission de la caractéristique extraite des données biométriques au serveur (300) ;
l'unité de collationnement (30) collationne la caractéristique extraite des données biométriques avec les données biométriques enregistrées précédemment de l'utilisateur, lesquelles données enregistrées précédemment sont stockées dans l'unité de stockage (31), pour calculer un deuxième score, détermine si le deuxième score est ou non égal ou supérieur à une valeur seuil prédéterminée, et cause une transmission du résultat de la détermination à l'appareil de traitement de données biométriques (100) ; et
si le deuxième score est égal ou supérieur à la valeur seuil prédéterminée et que l'unité de détection (18) détecte continuellement l'action prédéterminée et que le premier score est égal ou supérieur à la valeur seuil prédéterminée, alors l'unité d'authentification (12) détermine que l'authentification de l'utilisateur est réussie.

2. Système de traitement de données biométriques selon la revendication 1, dans lequel
l'unité de détermination (11) détermine si les données biométriques de l'utilisateur ont ou non une qualité prédéterminée,
dans lequel dans un cas dans lequel les données biométriques de l'utilisateur sont déterminées avoir la qualité prédéterminée, l'unité de commande affiche un état de progrès d'un processus d'authentification entier sur l'unité d'affichage.

3. Système de traitement de données biométriques selon la revendication 1 ou 2, comprenant en outre :
une unité d'acquisition (19) configurée pour acquérir, de l'unité d'entrée (20), des informations sur un service à recevoir par l'utilisateur ;
dans lequel dans un cas dans lequel le processus d'authentification est effectué plus d'une fois, l'unité de commande (10) est configurée pour afficher sur l'unité d'affichage (13) un message demandant l'entrée d'un type de caractéristique qui est différent pour chaque processus d'authentification, et
dans lequel l'unité d'authentification (12) exécute un processus consistant à permettre la fourniture du service à l'utilisateur, dans un cas dans lequel l'authentification de l'utilisateur est déterminée réussie dans tous les processus d'authentification.

4. Système de traitement de données biométriques selon l'une quelconque des revendications 1 à 2, comprenant en outre :
une unité d'acquisition (19) qui acquiert, d'une unité d'entrée (20), des informations sur un service à recevoir par l'utilisateur, dans lequel l'unité d'authentification (19) exécute un processus consistant à permettre la fourniture du service à l'utilisateur, dans un cas dans lequel l'authentification de l'utilisateur est déterminée être réussie.

5. Procédé de traitement de données biométriques exécuté par un système de traitement de données biométriques, le système de traitement de données biométriques comprenant un appareil de traitement de données biométriques (100) et un appareil serveur (300),
l'appareil de traitement de données biométriques (100) comprenant une unité de commande (10), une unité de détermination (11), une unité d'authentification (12), une unité d'affichage (13), une unité de détection (18) et une unité d'entrée (20) ;
et l'appareil serveur (300) comprenant une unité de collationnement (30) et une unité de stockage (31) stockant des données biométriques des utilisateurs du système ;
où le procédé comprend les étapes suivantes :
par l'unité de commande (10) faire que l'unité d'affichage (13) affiche un message demandant à un utilisateur de faire une action prédéterminée ;
par l'unité de détection (18) déterminer si l'action prédéterminée par l'utilisateur est détectée, et si l'action prédéterminée par l'utilisateur est détectée alors, par l'unité de commande (10), faire que l'unité d'affichage (13) affiche en outre un message demandant une entrée d'un type de données biométriques ayant un type de caractéristique, en vertu de quoi la personne à authentifier ne sait pas quel type de données biométriques ayant quel type de caractéristique a besoin d'être entré, jusqu'à ce que ce message soit affiché sur l'unité d'affichage (13) ;
par l'unité de détermination (11) collationner la caractéristique extraite des données biométriques avec une caractéristique prédéterminée pour calculer un premier score, et déterminer si le premier score est égal ou supérieur à une valeur seuil prédéterminée ;
si le premier score est égal ou supérieur à la valeur seuil prédéterminée, alors par l'unité d'authentification (12) déterminer si l'unité de détection (18) détecte ou non continuellement l'action prédéterminée, et par l'unité de détermination (11) causer une transmission de la caractéristique extraite des données biométriques au serveur (300) ;
par l'unité de collationnement (30) collationner la caractéristique extraite des données biométriques avec les données biométriques enregistrées précédemment de l'utilisateur, lesquelles données enregistrées précédemment sont stockées dans l'unité de stockage (31), pour calculer un deuxième score, et déterminer si le deuxième score est ou non égal ou supérieur à une valeur seuil prédéterminée, et causer une transmission du résultat de la détermination à l'appareil de traitement de données biométriques (100) ; et
si le deuxième score est égal ou supérieur à la valeur seuil prédéterminée et que l'unité de détection (18) détecte continuellement l'action prédéterminée et que le premier score est égal ou supérieur à la valeur seuil prédéterminée, alors par l'unité d'authentification (12) déterminer que l'authentification de l'utilisateur est réussie.

6. Programme informatique qui lorsque exécuté sur un ordinateur fait que l'ordinateur met en oeuvre les étapes du procédé selon la revendication 5.
